# EUROPEAN PATENT APPLICATION

(11) **EP 3 832 897 A1**
(43) Date of publication of application: **09.06.2021**
(21) Application number: 18929365.7
(22) Date of filing: 10.08.2018
(51) Int. Cl.: H04B 7/06

(54) **REFERENCE SIGNAL MEASUREMENT CONFIGURATION METHOD, TERMINAL DEVICE, AND NETWORK DEVICE**

(71) Applicant: GUANGDONG OPPO MOBILE TELECOMMUNICATIONS CORP., LTD., Dongguan Guangdong 523860 (CN)
(72) Inventor: SHI, Zhihua, Dongguan, Guangdong 523860 (CN); CHEN, Wenhong, Dongguan, Guangdong 523860 (CN); ZHANG, Zhi, Dongguan, Guangdong 523860 (CN)
(74) Representative: RGTH
(86) International application number: PCT/CN2018/100097
(87) International publication number: WO 2020/029302

(57) **Abstract**

Disclosed in the present invention are a reference signal measurement configuration method, a terminal device, a network device, and a computer storage medium. The method comprises: measuring at least one measurement parameter for at least one candidate reference signal to obtain a measurement result of the at least one measurement parameter for the at least one reference signal; selecting a reference signal from the at least one candidate reference signal on the basis of the measurement result of the at least one measurement parameter for the at least one candidate reference signal; the measurement parameter comprising at least a first type of measurement parameter; the first type of measurement parameter being: a parameter, other than L1-RSRP, for representing reference signal quality.

## Description

### TECHNICAL FIELD

The disclosure relates to the technical field of information processing, and particularly to a method for beam reference signal (RS) measurement configuration, a terminal device, a network device, a chip, a computer-readable storage medium, a computer program product, and a computer program.

### BACKGROUND

A new radio (NR)/5^{th}-generation (5G) multi-beam system covers a whole cell through different beams. Different beams are recognized through different signals they bear. For example, different synchronous signal blocks (SSBs) are transmitted on different beams, and a terminal device may distinguish different beams through different SSBs. Different channel state information reference signals (CSI-RSs) are transmitted on different beams, and the terminal device may recognize different beams through the CSI-RSs or CSI-RS resources.

In a multi-beam system, the terminal device needs to measure some signals, determine which beams have better transmission quality based on a measurement result, and report related information to a network. During such processing, layer 1 - reference signal receiving power (L1-RSRP) is usually used as a measurement parameter. However, such a processing manner has the problem that an L1-RSRP-based measurement manner is too undiversified and also has the problem that adaptability to more scenarios may not be ensured.

### SUMMARY

For solving the foregoing technical problems, embodiments of the disclosure provide a method for beam reference signal (RS) measurement configuration, a terminal device, a network device, a chip, a computer-readable storage medium, a computer program product, and a computer program.

In a first aspect, a method for beam RS measurement configuration is provided, which is applied to a terminal device and includes the following operations.

At least one measurement parameter of at least one candidate beam RS is measured to obtain a measurement result for the at least one measurement parameter of the at least one candidate beam RS.

A beam RS is selected from the at least one candidate beam RS based on the measurement result for the at least one measurement parameter of the at least one candidate beam RS.

The measurement parameter may at least include a first-type measurement parameter, and the first-type measurement parameter may include a parameter, other than L1-RSRP, used for indicating quality of a beam RS.

In a second aspect, a method for beam RS measurement configuration is provided, which is applied to a network device and includes the following operation.

At least one measurement parameter of at least one beam RS is configured for a terminal device.

The measurement parameter may at least include a first-type measurement parameter, and the first-type measurement parameter may include a parameter, other than L1-RSRP, used for indicating quality of a beam RS.

In a third aspect, a terminal device is provided, which includes a first communication unit and a first processing unit.

The first communication unit is arranged to measure at least one measurement parameter of at least one candidate beam RS, to obtain a measurement result for the at least one measurement parameter of the at least one candidate beam RS.

The first processing unit is arranged to select a beam RS from the at least one candidate beam RS based on the measurement result for the at least one measurement parameter of the at least one candidate beam RS.

The measurement parameter may at least include a first-type measurement parameter, and the first-type measurement parameter may include a parameter, other than L1-RSRP, used for indicating quality of a beam RS.

In a fourth aspect, a network device is provided, which includes a second communication unit.

The second communication unit is arranged to configure at least one measurement parameter of at least one beam RS for a terminal device.

The measurement parameter may at least include a first-type measurement parameter, and the first-type measurement parameter may include a parameter, other than L1-RSRP, used for indicating quality of a beam RS.

In a fifth aspect, a terminal device is provided, which includes a processor and a memory. The memory may be arranged to store a computer program, and the processor may be arranged to call and run the computer program stored in the memory to perform the method in the first aspect or each implementation thereof.

In a sixth aspect, a network device is provided, which includes a processor and a memory. The memory may be arranged to store a computer program, and the processor may be arranged to call and run the computer program stored in the memory to perform the method in the second aspect or each implementation thereof.

In a seventh aspect, a chip is provided, which is arranged to perform the method in any aspect of the first aspect to the second aspect or each implementation thereof.

Specifically, the chip includes a processor, arranged to call and run a computer program in a memory to cause a device installed with the chip to perform the method in any aspect of the first aspect to the second aspect or each implementation thereof.

In an eighth aspect, a computer-readable storage medium is provided, which is arranged to store a computer program, the computer program causing a computer to perform the method in any aspect of the first aspect to the second aspect or each implementation thereof.

In a ninth aspect, a computer program product is provided, which includes computer program instructions that, when executed by a computer, causes the computer to perform the method in any aspect of the first aspect to the second aspect or each implementation thereof.

In a tenth aspect, a computer program is provided, which may run in a computer to enable the computer to perform the method in any aspect of the first aspect to the second aspect or each implementation thereof.

Through the solutions provided in the embodiments of the disclosure, the first-type measurement parameter other than the L1-RSRP may be configured, thereby implementing beam RS measurement based on the newly configured measurement parameter. In such a manner, normal configuration and measurement of a system is ensured when the new measurement parameter is introduced, a processing capability of the system is ensured, and the problems of relatively undiversified measurement parameter and inapplicability to multiple communication scenarios may be solved.

### BRIEF DESCRIPTION OF THE DRAWINGS

FIG. 1 is a first schematic diagram of an architecture of a communication system according to an embodiment of the disclosure.
FIG. 2 is a flowchart of a method for beam RS measurement configuration according to an embodiment of the disclosure.
FIG. 3 is a composition structure diagram of a terminal device according to an embodiment of the disclosure.
FIG. 4 is a composition structure diagram of a communication device according to an embodiment of the disclosure.
FIG. 5 is a schematic block diagram of a chip according to an embodiment of the disclosure.
FIG. 6 is a second schematic diagram of an architecture of a communication system according to an embodiment of the disclosure.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

The technical solutions of the embodiments of the disclosure may be applied to various communication systems, such as, a global system of mobile communication (GSM), a code division multiple access (CDMA) system, a wideband code division multiple access (WCDMA) system, a general packet radio service (GPRS) system, a long term evolution (LTE) system, an LTE frequency division duplex (FDD) system, LTE time division duplex (TDD) system, a universal mobile telecommunication system (UMTS), a worldwide interoperability for microwave access (WiMAX) communication system or a future 5G system.

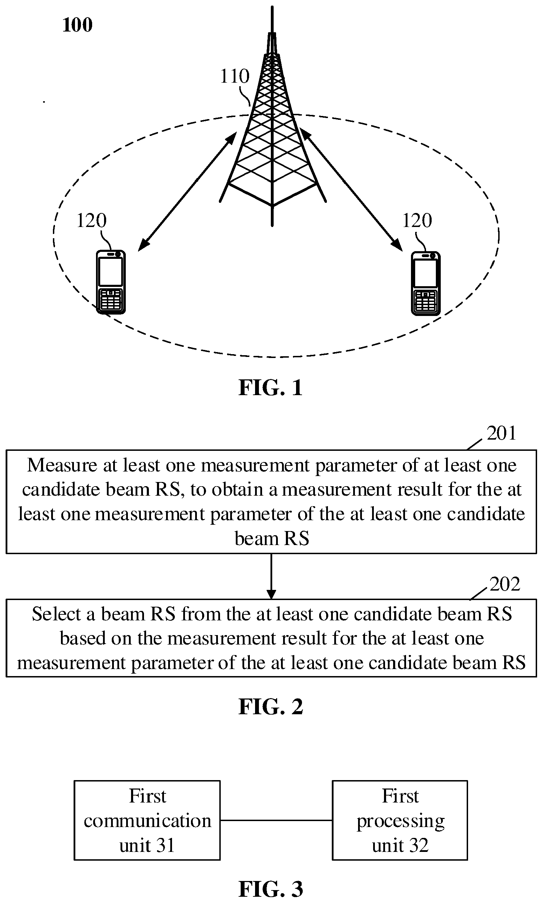

Exemplarily, a communication system 100 that the embodiments of the disclosure are applied to may be illustrated in FIG. 1. The communication system 100 may include a network device 110, and the network device 110 may be a device that communicates with a terminal device 120 (or called a communication terminal and a terminal). The network device 110 may provide communication coverage for a particular geographical area, and may communicate with a terminal device located in the coverage area. Optionally, the network device 110 may be a base transceiver station (BTS) in the GSM or the CDMA system, may also be a NodeB (NB) in the WCDMA system, and may further be an evolutional Node B (eNB or eNodeB) in the LTE system, or a wireless controller in a cloud radio access network (CRAN). Or the network device may be a mobile switching center, a relay station, an access point, a vehicle-mounted device, a wearable device, a hub, a switch, a network bridge, a router, a network-side device in a future 5G network, a network device in a future evolved public land mobile network (PLMN) or the like.

The communication system 100 further includes at least one terminal device 120 located within the coverage area of the network device 110. A "terminal device" used herein includes, but not limited to, a device arranged to receive/send a communication signal through a wired line connection, for example, through public switched telephone network (PSTN), digital subscriber line (DSL), digital cable and direct cable connections, and/or another data connection/network, and/or through a wireless interface, for example, for a cellular network, a wireless local area network (WLAN), a digital television network like a digital video broadcasting-handheld (DVB-H) network, a satellite network and an amplitude modulated (AM)-frequency modulated (FM) broadcast transmitter, and/or another communication terminal, and/or an Internet of things (IoT) device. The terminal device arranged to communicate through a wireless interface may be called a "wireless communication terminal", a "wireless terminal" or a "mobile terminal." Examples of a mobile terminal include, but are not limited to, a satellite or cellular telephone, a personal communication system (PCS) terminal capable of combining a cellular radio telephone and data processing, faxing and data communication capabilities, a personal digital assistant (PDA) capable of including a radio telephone, a pager, Internet/intranet access, a Web browser, a notepad, a calendar and/or a global positioning system (GPS) receiver, and a conventional laptop and/or palmtop receiver or another electronic device including a radio telephone transceiver. The terminal device may refer to an access terminal, User Equipment (UE), a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a session initiation protocol (SIP) phone, a wireless local loop (WLL) station, a PDA, a handheld device with a wireless communication function, a computing device, another processing device connected to a wireless modem, a vehicle device, a wearable device, a terminal device in the 5G network, a terminal device in the future evolved PLMN or the like.

Optionally, device to device (D2D) communication may be performed between terminal devices 120.

Optionally, the 5G system or the 5G network may also be called an NR system or an NR network.

A network device and two terminal devices are exemplarily illustrated in FIG. 1. Optionally, the communication system 100 may include multiple network devices and another number of terminal devices may be included in coverage of each network device. No limits are made thereto in the embodiments of the disclosure.

Optionally, the communication system 100 may further include other network entities such as a network controller and a mobility management entity. No limits are made thereto in the embodiments of the disclosure.

It is to be understood that a device with a communication function in the network/system in the embodiments of the disclosure may be called a communication device. For example, for the communication system 100 illustrated in FIG. 1, communication devices may include the network device 110 and terminal device 120 with the communication function, and the network device 110 and the terminal device 120 may be the specific devices mentioned above and will not be elaborated herein. The communication devices may further include other devices in the communication system 100, for example, other network entities like a network controller and a mobility management entity. No limits are made thereto in the embodiments of the disclosure.

It is to be understood that terms "system" and "network" in the disclosure may usually be used interchangeably in the disclosure. In the disclosure, term "and/or" is only an association for describing associated objects and represents that three relationships may exist. For example, A and/or B may represent three conditions: i.e., independent existence of A, existence of both A and B, and independent existence of B. In addition, character "/" in the disclosure usually represents that previous and next associated objects form an "or" relationship.

### First embodiment

The embodiment of the disclosure provides a method for beam reference signal (RS) measurement configuration, which is applied to a terminal device and, as illustrated in FIG. 2, includes the following operations.

In 201, at least one measurement parameter of at least one candidate beam RS is measured to obtain a measurement result for the at least one measurement parameter of the at least one candidate beam RS.

In 202, a beam RS is selected from the at least one candidate beam RS based on the measurement result for the at least one measurement parameter of the at least one candidate beam RS.

The measurement parameter at least includes a first-type measurement parameter, and the first-type measurement parameter includes a parameter, other than L1-RSRP, used for indicating quality of a beam RS.

It is to be pointed out that the measurement parameter may include the L1-RSRP. That is, during practical processing, the L1-RSRP and/or at least one first-type measurement parameter may be included.

The first-type measurement parameter may include at least one of a layer 1 signal to interference plus noise ratio (L1-SINR) or layer 1 reference signal receiving quality (L1-RSRQ).

That is, when a new beam RS is selected by the solution provided in the embodiment, the terminal device may perform measurement by use of existing L1-RSRP, and/or, may also perform measurement by use of one or more of the L1-SINR, L1-RSRQ, or a hypothetical block error rate (BLER).

From the above descriptions, it can be understood that measurement may be performed only for the first-type measurement parameter in the embodiment. For example, the operation of measuring the at least one measurement parameter of the at least one candidate beam RS includes that: measuring the first-type measurement parameter of the at least one candidate beam RS.

It is to be understood that a terminal of a new version or a terminal device with a reporting capability supporting the first-type measurement parameter selects a new candidate beam RS by use of the first-type measurement parameter during beam failure recovery.

Correspondingly, the method further includes that: threshold information configured by a network side for the first-type measurement parameter is received. Specifically, the network side may configure threshold information corresponding to different first-type measurement parameters respectively for the terminal device.

Before the operation of measuring the at least one measurement parameter of the at least one candidate beam RS, the method further includes the following operations.

Configuration information sent by the network side is received.

A measurement parameter to be measured by the terminal device is determined based on the configuration information.

For a terminal device that supports the first-type measurement parameter/reporting quality, the network configures information related to beam failure recovery for the terminal device in the following configuration manners.

A first manner: the configuration information may include the at least one measurement parameter that the network side instructs the terminal device to measure. The at least one measurement parameter may include the L1-RSRP, and/or, the at least one first-type measurement parameter.

Further, the network side may configure one or more measurement parameters for the terminal device through the configuration information. When at least two measurement parameters are configured, the terminal device may independently select (i.e., self-select) a measurement parameter to be measured from the at least two measurement parameters. Of course, in such case, all the measurement parameters may be selected, or one or part of measurement parameters therein may be selected. For example, the configuration information sent by the network side includes measurement parameters 1, 2 and 3, and if the terminal device is only required to measure one of them at this time, the measurement parameter 1 may be selected for subsequent processing. Correspondingly, the terminal device, when selecting part of measurement parameters in the configuration information, may select them according to historical information. For example, if a measurement parameter is frequently used for beam RS measurement, the measurement parameter may be kept measured. Or, the terminal device may randomly select, based on the configuration information, the measurement parameter to be measured. Elaborations are omitted herein.

A second manner: a specifically used measurement parameter is indicated. For example, a field indicates that a measurement parameter/reporting quality A or B is used.

For example, the operation that the measurement parameter to be measured by the terminal device is determined based on the configuration information includes the following operation.

The measurement parameter to be measured by the terminal device is determined based on a content of a first field in the configuration information.

The first field may be a field, determined according to a protocol and used for indicating the measurement parameter, in the configuration information, and is specifically set according to a practical condition.

For example, when there are two measurement parameters A and B, the measurement parameter A or B may be explicitly indicated through this field in the configuration information.

Or, determination of the measurement parameter to be measured is performed according to whether the first field is default or not.

For example, when the first field in the configuration information is default, it is determined that a first target measurement parameter is required to be measured by the terminal device, and when the first field is not default, it is determined that a second target measurement parameter is required to be measured by the terminal device, the first target measurement parameter being different from the second target measurement parameter.

For example, what the first target measurement parameter and the second target measurement parameter are respectively may be preset through a system, and then the two parties negotiate about that the first field, if indicating, is only used for indicating the second target measurement parameter and the first field, when being default, is determined to be used for indicating the first target measurement parameter. There is made such a hypothesis that there are the measurement parameters A and B. When the field is default, the terminal device is instructed to use A, and when the field is configured, only B is configured to instruct the terminal device to use B.

In such a manner, a radio resource control (RRC) configuration modification method is that: the measurement parameter is configured through a quality field, and then the threshold information corresponding to the measurement parameter is indicated through a threshold field. For example:

```
 Quality quantity value type OPTIONAL, -- Need M
 Threshold threshold value type OPTIONAL, -- Need M.
```

In addition, the following field may be deleted:

```
 rsrp-ThresholdSSB RSRP-Range OPTIONAL, -- Need M.
```

A third manner: the measurement parameter to be measured by the terminal device is determined through the threshold information in the configuration information.

For example, it is possible to implicitly indicate whether to use the measurement parameter A or the measurement parameter B by indicating threshold information.

Specifically, a target measurement parameter to be measured by the terminal device may be determined according to a parameter name corresponding to the threshold information or according to a position of the threshold information in the configuration information.

And/or, the target measurement parameter to be measured by the terminal device is determined according to a data type corresponding to the threshold information.

For example, when the existing field rsrp-TrhresholdSSB is configured, the L1-RSRP is used, and when a new field sinr-Threshold is configured, the L1-SINR is used. For example, configurations are made through the following fields in an RRC configuration:

```
 rsrp-ThresholdSSB RSRP-Range OPTIONAL, -- Need M
 sinr-Threshold SINR-Range OPTIONAL, -- Need M.
```

A fourth manner: the measurement parameter that the network side instructs the terminal device to measure is determined through a content of a first keyword structure in the configuration information sent by the network side.

A first keyword may be a "CHOICE" field. Of course, the two parties may negotiate to use another field as the first keyword according to actual processing. For example, a CHOICE keyword structure is used, and sinr-Threshold may be replaced with another name. If multiple first-type measurement parameters are introduced in Release-16 (Rel-16), other names such as rsrq-Threshold may be continuously added. For example:

```
 threshold CHOICE {
 rsrp-ThresholdSSB RSRP-Range OPTIONAL, -- Need M
 sinr-Threshold SINR-Range OPTIONAL, -- Need M
 }.
```

With adoption of the abovementioned manners, a new measurement parameter may be selected according to the measurement parameter and threshold information configured by the network side.

Based on the abovementioned processing, how to configure the candidate beam RS and the corresponding measurement parameter for measurement parameter selection will be described below.

A first scenario: at least two of the at least one measurement parameter and a set of candidate beam RSs are acquired from the network side. For example, for the terminal device that supports the first-type measurement parameter, the network, when configuring the information related to beam failure recovery for the terminal device, configures, through signaling, the two measurement parameters A and B but configures a set of candidate beam RSs corresponding to optional beams.

The measurement parameter sent by the network side may include the first-type measurement parameter and/or the L1-RSRP.

The operation of selecting the beam RS from the at least one candidate beam RS based on the measurement result for the at least one measurement parameter of the at least one candidate beam RS includes the following operations.

A target measurement parameter is selected from the at least two measurement parameters, and a beam RS is selected from the set of candidate beam RSs according to threshold information and measurement result corresponding to the selected target measurement parameter. That is, the terminal device independently selects A or B and a corresponding threshold to select a beam RS. It is also to be pointed out that the threshold information may include a threshold.

Or, a beam RS is selected, according to at least two pieces of threshold information and at least two measurement results corresponding to the at least two measurement parameters, from a subset of candidate beam RSs that satisfy any of the at least two pieces of threshold information in the set of candidate beam RSs, each of the at least two measurement parameters corresponds to a respective one of the at least two pieces of threshold information and a respective one of the at least two measurement results.

Each measurement parameter in the at least two measurement parameters is measured to obtain a respective measurement result, multiple candidate beam RSs are selected from the set of candidate beam RSs according to the respective measurement result corresponding to each measurement parameter and the threshold information configured by the network side for the measurement parameter, a union is formed by the candidate beam RSs selected based on all the measurement parameters, and a beam RS is selected from the union as a finally selected RS. For example, a new beam RS may be selected from a union of a subset of candidate beam RSs that satisfy a threshold of the measurement parameter A and a subset of candidate beam RSs that satisfy a threshold of the measurement parameter B. That is to say, the selected beam RS may satisfy the threshold corresponding to the measurement parameter A or satisfy the threshold corresponding to the measurement parameter B.

Or, a beam RS is selected, according to at least two pieces of threshold information and at least two measurement results corresponding to the at least two measurement parameters, from a subset of candidate beam RSs that satisfy all of the at least two pieces of threshold information in the set of candidate beam RSs, each of the at least two measurement parameters corresponds to a respective one of the at least two pieces of threshold information and a respective one of the at least two measurement results.

Each measurement parameter in the at least two measurement parameters is measured to obtain a respective measurement result, multiple candidate beam RSs are selected from the set of candidate beam RSs based on the respective measurement result corresponding to each measurement parameter and the threshold information configured by the network side for the measurement parameter, then an intersection of the candidate beam RSs selected based on all the measurement parameters is obtained, and a beam RS is selected from the intersection as a finally selected RS. For example, a new beam RS may be selected from an intersection of a subset of candidate beam RSs that satisfy the threshold of the measurement parameter A and a subset of candidate beam RSs that satisfy the threshold of the measurement parameter B. That is, the new beam RS needs to satisfy both the threshold corresponding to the measurement parameter A and the threshold corresponding to the measurement parameter B. It is to be pointed out here that processing is stopped when the intersection cannot be obtained based on all the candidate beam RSs.

Or, based on selection priorities of the at least two measurement parameters, preferably based on the measurement result of a measurement parameter with a high selection priority, a beam RS that satisfies the threshold information corresponding to the measurement parameter with the high selection priority is selected from the set of candidate beam RSs according to the threshold information and measurement result corresponding to the measurement parameter with the high selection priority.

For example, there are the two measurement parameters A and B, a selection priority of A being relatively high and a selection priority of B being relatively low. In such case, a new beam RS is selected from the set of candidate beam RSs preferably according to the threshold information corresponding to the measurement parameter A with the high selection priority.

When a beam RS that satisfies the threshold information corresponding to the measurement parameter with the high selection priority may not be selected from the set of candidate beam RSs based on the measurement result of the measurement parameter with the high selection priority, a beam RS that satisfies threshold information corresponding to a measurement parameter with a low selection priority is selected from the set of candidate beam RSs according to the threshold information and measurement result of the measurement parameter with the low selection priority.

For example, there are the two measurement parameters A and B, the selection priority of A being relatively high and the selection priority of B being relatively low. In such case, a new beam RS is selected from the set of candidate beam RSs preferably according to the threshold information corresponding to the measurement parameter A with the high selection priority. If no beam RS satisfies the condition, a new beam RS is selected from RSs that satisfy the threshold corresponding to the measurement parameter B with the low selection priority.

Or, a first candidate subset is selected from the set of candidate beam RSs according to a measurement result and corresponding threshold information of a first target measurement parameter in the at least two measurement parameters, and a beam RS is selected from the first candidate subset according to a measurement result and corresponding threshold information of a second target measurement parameter in the at least two measurement parameters, a selection priority of the first target measurement parameter being higher than that of the second target measurement parameter.

The first candidate subset may be selected in a manner of selecting the candidate beam RS of which the RS quality is higher than a preset value for addition to the first candidate subset. A measurement standard for the RS quality may be set according to actual conditions, and for example, may include a signal to noise ratio and signal strength. Elaborations are omitted herein.

For example, a subset of beam RSs or beam RSs with top T prioritized quality that satisfy the corresponding threshold are selected according to the measurement parameter A. A new beam is selected from the subset of beam RSs set by use of the measurement parameter B.

Specifically, one of the following operations is included.

A second candidate subset is selected from the first candidate subset according to the measurement result and corresponding threshold information of the second target measurement parameter in the at least two measurement parameters, and a beam RS is selected from the second candidate subset. For example, when there are the measurement parameters A and B, after the first candidate subset is obtained by screening the set of candidate beam RSs based on the measurement parameter A, a smaller subset is selected from the first candidate subset based on the threshold information of the measurement parameter B as the second candidate subset, and a new beam RS is selected from the second candidate subset.

Beam RSs with top N prioritized quality are selected from the first candidate subset to form a third candidate subset according to the measurement result and corresponding threshold information of the second target measurement parameter in the at least two measurement parameters, and a beam RS is selected from the third candidate subset, N being an integer. For example, when there are the measurement parameters A and B, after the first candidate subset is obtained by screening the set of candidate beam RSs based on the measurement parameter A, beam RSs with top T' prioritized quality are directly selected from the first candidate subset to form the new third candidate subset, and if elements in the first candidate subset are not enough, the number of elements in the new third candidate subset is smaller than T' and a new beam RS is selected from the third candidate subset.

A beam RS with highest quality is directly selected from the first candidate subset according to the measurement result and corresponding threshold information of the second target measurement parameter in the at least two measurement parameters. For example, when there are the measurement parameters A and B, after the first candidate subset is obtained by screening the set of candidate beam RSs based on the measurement parameter A, the best beam RS is directly selected from the first candidate subset as a new beam RS by use of the measurement parameter B and the corresponding threshold information thereof.

Or, a measurement parameter may be selected from the at least two measurement parameters sequentially according to the selection priorities, a beam RS is selected from the set of candidate beam RSs based on the measurement result and corresponding threshold information of the selected measurement parameter, and an uplink signal corresponding to the selected beam RS is sent to the network. Whether a valid network response is received or not is detected. If no valid network response is received from the network side, the next measurement parameter is continued to be selected from the measurement parameters with relatively low selection priorities.

The operation that the next measurement parameter is continued to be selected from the measurement parameters with the relatively low selection priorities includes the following operations.

Whether all the at least two measurement parameters have been selected or not is determined. If YES, a measurement parameter are restarted to be selected from the at least two measurement parameters sequentially according to the selection priorities, and processing of beam RS selection based on the measurement parameter is executed until an ending condition is satisfied.

For example, there are the measurement parameters A and B, the selection priority of A being relatively high and the selection priority of B being relatively low. A new beam RS is preferably selected from the beam RSs that satisfy the threshold corresponding to the measurement parameter A with the relatively high selection priority, and then a beam failure recovery request is sent through an uplink signal corresponding to the beam RS. If no valid network response is received, a beam RS is selected from the RSs that satisfy the threshold corresponding to the measurement parameter B, and a corresponding beam failure recovery request is sent. If no valid network response is received, selection from the beam RSs that satisfy the threshold corresponding to the measurement parameter A is continued. The two measurement parameters are alternately used until the stopping condition is satisfied.

Or, a measurement parameter is selected from the at least two measurement parameters according to the selection priorities, a beam RS is selected from the set of candidate beam RSs based on the measurement result and corresponding threshold information of the selected measurement parameter, and an uplink signal corresponding to the selected beam RS is sent to the network. If no valid network response is received from the network side, the operations that beam RS selection is performed based on the selected measurement parameter and the uplink signal corresponding to the selected RS is sent to the network are continued to be executed. When the processing is stopped according to a rule and no valid network response is received from the network side, another measurement parameter is selected from the at least two measurement parameters, and beam RS selection is continued to be performed based on the selected another measurement parameter.

For example, there are two measurement parameters A and B, the selection priority of A being relatively high and the selection priority of B being relatively low. A new beam RS is preferably selected from beam RSs that satisfy the threshold according to the measurement parameter A with the high selection priority, and a corresponding beam failure recovery request is sent through an uplink signal corresponding to the new beam RS, and if no valid network response is received, is continued to be sent according to a rule until the specified stopping condition is satisfied. Then, a beam RS is selected from beam RSs that satisfy the threshold corresponding to the measurement parameter B and a corresponding beam failure recovery request is sent. That is, the two measurement parameters are not used alternately, one is preferably used, the other is used to continue trying if beam failure recovery fails under a specified condition, and if no corresponding beam RS is successfully selected after all tries are completed, processing may be ended.

The specified stopping condition may be a number of times of transmission. For example, the number of times of transmission may be set to be 5, and in such case, a new measurement parameter of which a selection priority is lower than that of a present measurement parameter may be adopted for RS selection after sending for 5 times.

The selection priority may be configured by the network side, or specified according to a protocol, or determined by the terminal device.

A second scenario: M measurement parameters and M sets of candidate beam RSs sent by the network side are acquired, M being an integer greater than or equal to 2 and each of the M measurement parameters corresponding to a different one of the M sets of candidate beam RSs.

The measurement parameters sent by the network side may include the first-type measurement parameter and/or the L1-RSRP.

For example, when there are two measurement parameters A and B, for the terminal device supporting the first-type measurement parameter/reporting quality, the network, when configuring the information related to beam failure recovery for the terminal device, configures, through signaling, the two measurement parameters A and B but configures two sets of candidate beam RSs corresponding to optional beams. The two sets of candidate beam RSs correspond to the measurement parameters A and B respectively, namely a beam RS set 1 corresponds to the measurement parameter A and a beam RS set 2 corresponds to the measurement parameter B.

A new beam is selected according to the measurement parameters and thresholds configured by the network specifically in one of the following manners.

A target measurement parameter is selected from the M measurement parameters, and a beam RS is selected from a set of candidate beam RSs corresponding to the target measurement parameter according to threshold information and measurement result corresponding to the selected target measurement parameter. For example, when two measurement parameters are configured, the beam RS set 1 or 2 is independently selected, and a new beam RS is selected by use of the corresponding measurement result and threshold.

Or, for each of the M measurement parameters, beam RSs satisfying the threshold information of the measurement parameter are selected from the set of candidate beam RSs corresponding to the measurement parameter according to the threshold information and measurement result corresponding to the measurement parameter, and a beam RS is selected from a union set formed by all of the selected beam RSs. For example, when two measurement parameters are configured, a first set of beam RSs that satisfy a threshold corresponding to a measurement parameter 1 are selected from the beam RS set 1, and a second set of beam RSs that satisfy a threshold corresponding to a measurement parameter 2 are selected from the beam RS set 2, and a new beam RS is selected from a union formed by the first set of beam RSs and the second set of beam RSs.

Or, a measurement parameter is sequentially selected in a descending order of selection priorities of the M measurement parameters, whether a beam RS that satisfies a condition can be selected from a corresponding set of candidate beam RSs is determined according to the threshold information and measurement result corresponding to the selected measurement parameter, when the beam RS that satisfies the condition can be selected, beam RS selection is completed, otherwise another measurement parameter is selected. For example, a new first set of beam RSs are preferably selected from the beam RSs that satisfy the corresponding threshold in the beam RS set 1 corresponding to the measurement parameter 1, and when no beam RS satisfies the condition, a new second set of beam RSs are selected from the beam RS set 2 corresponding to the measurement parameter 2 according to the corresponding threshold.

Or, a measurement parameter is selected from the M measurement parameters sequentially according to the selection priorities, a beam RS is selected from the set of candidate beam RSs corresponding to the selected measurement parameter based on the measurement result and corresponding threshold information of the selected measurement parameter, and an uplink signal corresponding to the selected candidate beam RS is sent to the network. Whether a valid network response is received or not is detected. If no valid network response is received from the network side, a next measurement parameter is continued to be selected from the measurement parameters with relatively low selection priorities.

The operation that the next measurement parameter is continued to be selected from the measurement parameters with the relatively low selection priorities includes the following operations.

Whether all the M measurement parameters have been selected or not is determined. If YES, a measurement parameter is restarted to be selected from the M measurement parameters sequentially according to the selection priorities, and processing of beam RS selection based on the measurement parameter is executed until a stopping condition is satisfied.

For example, the measurement parameters 1 and 2 are configured, a selection priority of the measurement parameter 1 being relatively high. A new beam RS is preferably selected from the beam RSs satisfying the corresponding threshold in the beam RS set 1 corresponding to the measurement parameter 1 with the relatively high selection priority, and then a corresponding beam failure recovery request is sent on an uplink resource corresponding to the new beam RS. If no corresponding valid network response is received, a beam RS is selected from the beam RSs satisfying the threshold corresponding to the measurement parameter 2 in the beam RS set 2 corresponding to the measurement parameter 2, and a corresponding beam failure recovery request is sent on an uplink resource corresponding to the selected beam RS. If no corresponding valid network response is received, selection from the beam RSs satisfying the corresponding threshold in the beam RS set 1 is continued and sending is continued. The two measurement parameters are alternately used until the stopping condition is satisfied.

Or, a measurement parameter is selected from the M measurement parameters according to the selection priorities, a beam RS is selected from the corresponding set of candidate beam RSs based on the measurement result and corresponding threshold information of the selected measurement parameter, and an uplink signal corresponding to the selected beam RS is sent to the network. Whether a valid network response is received or not is detected.

If no valid network response is received from the network side, processing of selecting the beam RS based on the selected measurement parameter and sending the uplink signal corresponding to the selected beam RS to the network is executed.

When the processing is stopped according to a rule and no valid network response is received from the network side, another measurement parameter is selected from the M measurement parameters and beam RS selection from the candidate beam RS set corresponding to the another measurement parameter is continued.

For example, the measurement parameters 1 and 2 are configured, the selection priority of the measurement parameter 1 being relatively high. A new beam RS is preferably selected from the beam RSs satisfying the corresponding threshold in the beam RS set 1 corresponding to the measurement parameter 1, and a corresponding beam failure recovery request is sent, and if no corresponding valid network response is received, is continued to be sent according to a rule until the specified stopping condition is satisfied. Then, a beam RS is selected from the RSs satisfying the corresponding threshold in the beam RS set 2 corresponding to the measurement parameter 2, and a corresponding beam failure recovery request is sent. In this manner, two measurement parameters are not used alternately during a selection operation over the multiple measurement parameters, one is preferably used, and if beam failure recovery fails under a specified condition, the other is used to continue trying.

A determination manner for priorities of the M sets of candidate beam RSs is one of the following: configuration by the network side, determination according to RS types, specification according to a protocol, determination based on the corresponding measurement parameters, or determination based on the corresponding threshold information.

The threshold information may include at least one of a threshold or a threshold type. Of course, there may also be other contents, and elaborations are omitted herein.

Configuration by the network side includes:
configuration according to an explicit indication sent by the network side, for example, the network side explicitly indicates a set priority; or,
determination according to a position of a domain where each set of candidate beam RSs are located in the configuration information sent by the network side, for example, the priorities are determined according to positions of domains corresponding to the beam RS set 1 and beam RS set 2 in configuration signaling.

Determination according to the RS types includes:
determination according to correspondences, configured by the network side, between beam RS types and priorities, or, determination according to the correspondences, specified in the protocol, between beam RS types and priorities.

For example, the priorities of the beam RS set 1 and beam RS set 2 are determined according to beam RS types. The corresponding relationship between the beam RS type and the priority is configured by the network, or, the corresponding relationship between the beam RS type and the priority is specified in the protocol.

The method further includes that: the threshold information is configured through RRC.

The operation that the threshold information is configured through RRC includes that: threshold information corresponding to a beam RS type is determined according to the threshold information configured through RRC, and threshold information corresponding to another beam RS type is adjusted according to power offset information; or, threshold information corresponding to at least two RS types is determined according to the threshold information configured through RRC.

The beam RS may comprise at least one of an SSB or a CSI-RS.

It is to be pointed out that the embodiment does not involve whether the threshold information is different for different RS types or not. For the L1-RSRP, a threshold for the SSB may be configured through RRC, and thus the threshold, when being used for the CSI-RS, is required to be adjusted according to a power offset. For a newly introduced measurement parameter, there are two possibilities: the threshold configured through RRC is for a certain beam RS type and thus is required to be adjusted according to the power offset when being used for another type (like the L1-RSRP); and the threshold configured through RRC is only configured for multiple beam RS types.

It can be seen that, with adoption of the solution, the first-type measurement parameter other than the L1-RSRP may be configured, thereby implementing beam RS measurement based on the newly configured measurement parameter. In such a manner, normal configuration and measurement of a system is ensured when the new measurement parameter is introduced, a processing capability of the system is ensured, and the problems of relatively undiversified measurement parameter and inapplicability to multiple communication scenarios may be solved.

### Second Embodiment

The embodiment of the disclosure provides a method for beam RS measurement configuration, which is applied to a network device and includes the following operation.

At least one measurement parameter of at least one beam RS is configured for a terminal device.

The measurement parameter at least includes a first-type measurement parameter, and the first-type measurement parameter includes a parameter, other than L1-RSRP, used for indicating quality of a beam RS.

It is to be pointed out that the measurement parameter may include the L1-RSRP. That is, during practical processing, the measurement parameter may include the L1-RSRP and/or at least one first-type measurement parameter.

The first-type measurement parameter may include at least one of an L1-SINR or L1-RSRQ.

That is, when a new beam RS is selected by the solution provided in the embodiment, the terminal device may perform measurement by use of existing L1-RSRP, and/or, may also perform measurement by use of one or more of the L1-SINR, L1-RSRQ. or a hypothetical BLER.

It can be understood through the above descriptions that measurement may be performed only for the first-type measurement parameter in the embodiment. For example, the operation that measurement is performed for at least one measurement parameter of at least one candidate beam RS includes that: configuration information is sent to the terminal device; and the measurement parameter to be measured by the terminal device is indicated based on the configuration information.

It is to be understood that a terminal of a new version or a terminal device with a reporting capability supporting the first-type measurement parameter selects a new candidate beam RS by use of the first-type measurement parameter during beam failure recovery.

Correspondingly, the method further includes that: threshold information for the first-type measurement parameter is configured. Specifically, a network side may configure threshold information corresponding to different first-type measurement parameters respectively for the terminal device.

For a terminal device that supports the first-type measurement parameter/reporting quality, when the network configures information related to beam failure recovery for the terminal device, the following configuration manners are supported.

A first manner: the configuration information may include the at least one measurement parameter that the network side instructs the terminal device to measure. The at least one measurement parameter may include the L1-RSRP, and/or, the at least one first-type measurement parameter.

Furthermore, the network side may configure one or more measurement parameters for the terminal device through the configuration information. When at least two measurement parameters are configured, the terminal device may independently select a measurement parameter to be measured from the at least two measurement parameters. Of course, in such case, all the measurement parameters may be selected, or one or part of measurement parameters therein may be selected. For example, the configuration information sent by the network side includes measurement parameters 1, 2 and 3, and if the terminal device is only required to measure one of them, the measurement parameter 1 may be selected for subsequent processing. Correspondingly, the terminal device, when selecting part of measurement parameters in the configuration information, may select them according to historical information. For example, if a measurement parameter is frequently used for beam RS measurement, the measurement parameter may be kept measured. Or, the terminal device may randomly select, based on the configuration information, the measurement parameter to be measured. Elaborations are omitted herein.

A second manner: a specifically used measurement parameter is indicated. For example, a field indicates that a measurement parameter/reporting quality A or B is used.

For example, the measurement parameter to be measured by the terminal device is indicated based on a content of a first field in the configuration information.

The first field may be a field, determined according to a protocol and used for indicating the measurement parameter, in the configuration information, and is specifically set according to a practical condition.

For example, when there are two measurement parameters A and B, the measurement parameter A or B may be explicitly indicated through this field in the configuration information.

Or, determination of the measurement parameter to be measured is performed according to whether the first field is default or not.

For example, when the first field in the configuration information is default, it is indicated that a first target measurement parameter is required to be measured by the terminal device, and when the first field is not default, it is indicated that a second target measurement parameter is required to be measured by the terminal device, the first target measurement parameter being different from the second target measurement parameter.

For example, what the first target measurement parameter and the second target measurement parameter are respectively may be preset through a system, and then the two parties negotiate about that the first field, if indicating, is only used for indicating the second target measurement parameter and the first field, when being default, is determined to be used for indicating the first target measurement parameter. There is made such a hypothesis that there are the measurement parameters A and B. When the field is default, the terminal device is instructed to use A, and when the field is configured, only B is configured to instruct the terminal device to use B.

In such a manner, an RRC configuration modification method is that: the measurement parameter is configured through a quality field, and then the corresponding threshold information is indicated through a threshold field. For example:

```
 Quality quantity value type OPTIONAL, -- Need M
 Threshold threshold value type OPTIONAL, -- Need M.
```

In addition, the following field may be deleted:

```
 rsrp-ThresholdSSB RSRP-Range OPTIONAL, -- Need M.
```

A third manner: the measurement parameter to be measured by the terminal device is indicated through the threshold information in the configuration information.

For example, it is possible to implicitly indicate whether to use the measurement parameter A or the measurement parameter B by indicating a threshold.

Specifically, a target measurement parameter to be measured by the terminal device may be indicated according to a parameter name corresponding to the threshold information or according to a position of the threshold information in the configuration information.

And/or, the target measurement parameter to be measured by the terminal device is indicated according to a data type corresponding to the threshold information.

For example, when the existing field rsrp-TrhresholdSSB is configured, the L1-RSRP is used, and when a new field sinr-Threshold is configured, the L1-SINR is used. For example, configurations are made through the following fields in an RRC configuration:

```
 rsrp-ThresholdSSB RSRP-Range OPTIONAL, -- Need M
 sinr-Threshold SINR-Range OPTIONAL, -- Need M.
```

A fourth manner: the measurement parameter to be measured by the terminal device is indicated through a content of a first keyword structure in the configuration information.

A first keyword may be a "CHOICE" field. Of course, the two parties may negotiate to use another field as the first keyword according to practical processing. For example, a CHOICE keyword structure is used, threshold, sinr-Threshold may be replaced with another name, and sinr-Threshold is only used for indicating an identifier of the first-type measurement parameter here. If multiple first-type measurement parameters are introduced in Rel-16, other names such as rsq-Threshold may be continuously added. For example:

```
 threshold CHOICE {
 rsrp-ThresholdSSB RSRP-Range OPTIONAL, -- Need M
 sinr-Threshold SINR-Range OPTIONAL, -- Need M}.
```

With adoption of the abovementioned manners, a new measurement parameter may be selected according to the measurement parameter and threshold information configured by the network side.

Based on the abovementioned processing, how to configure the candidate beam RS and the corresponding measurement parameter for measurement parameter selection will be described below.

A first scenario: at least two of the at least one measurement parameter and a set of candidate beam RSs are sent to the terminal device. For example, for the terminal device that supports the first-type measurement parameter, the network, when configuring the information related to beam failure recovery for the terminal device, configures, through signaling, the two measurement parameters A and B but configures a set of candidate beam RSs corresponding to optional beams.

The measurement parameters sent to the terminal device may include the first-type measurement parameter and/or the L1-RSRP.

A second scenario: M measurement parameters in the at least one measurement parameter and M sets of candidate beam RSs are sent to the terminal device, M being an integer greater than or equal to 2.

Different measurement parameters correspond to different sets of candidate beam RSs.

The measurement parameters sent to the terminal device may include the first-type measurement parameter and/or the L1-RSRP.

For example, when there are two measurement parameters A and B, for the terminal device that supports the first-type measurement parameter/reporting quality, the network, when configuring the information related to beam failure recovery for the terminal device, configures, through signaling, the two measurement parameters A and B but configures two sets of RSs (candidate beam RSs) corresponding to optional beams. The two sets correspond to the measurement parameters A and B respectively, namely a beam RS set 1 corresponds to the measurement parameter A and a beam RS set 2 corresponds to the measurement parameter B.

The threshold information may include at least one of a threshold or a threshold type. Of course, there may also be other contents, and elaborations are omitted herein.

The method further includes that: the threshold information is configured through RRC for the terminal device.

The operation that the threshold information is configured through RRC for the terminal device includes the following operations.

Threshold information corresponding to a beam RS type is determined according to the threshold information configured through RRC, and threshold information corresponding to another beam RS type is adjusted according to power offset information.

Or, threshold information corresponding to at least two beam RS types is determined according to the threshold information configured through RRC.

The RS may be at least one of an SSB or a CSI-RS.

It is to be pointed out that the embodiment does not involve whether the threshold information is different for different RS types or not. For the L1-RSRP, a threshold for the SSB may be configured through RRC, and thus the threshold, when being used for the CSI-RS, is required to be adjusted according to a power offset. For a newly introduced measurement parameter, there are two possibilities: the threshold configured through RRC is for a certain RS type and thus is required to be adjusted according to the power offset when being used for another type (like the L1-RSRP); and the threshold configured through RRC is only configured for multiple RS types.

It can be seen that, with adoption of the solution, the first-type measurement parameter other than the L1-RSRP may be configured, thereby implementing beam RS measurement based on the newly configured measurement parameter. In such a manner, normal configuration and measurement of a system is ensured when the new measurement parameter is introduced, and a processing capability of the system is ensured.

### Third Embodiment

The embodiment of the disclosure provides a terminal device, as illustrated in FIG. 3, which includes a first communication unit 31 and a first processing unit 32.

The first communication unit 31 is arranged to measure at least one measurement parameter of at least one candidate beam RS, to obtain a measurement result for the at least one measurement parameter of the at least one candidate beam RS.

The first processing unit 32 is arranged to select a beam RS from the at least one candidate beam RS based on the measurement result for the at least one measurement parameter of the at least one candidate beam RS.

The measurement parameter at least includes a first-type measurement parameter, and the first-type measurement parameter includes a parameter, other than L1-RSRP, used for indicating quality of a beam RS.

It is to be pointed out that the measurement parameter may include the L1-RSRP parameter. That is, during practical processing, the L1-RSRP and/or at least one first-type measurement parameter may be included.

The first-type measurement parameter may include at least one of an L1-SINR or L1-RSRQ.

That is, when a new beam RS is selected by the solution provided in the embodiment, the terminal device may perform measurement by use of existing L1-RSRP, and/or, may also perform measurement by use of one or more of the L1-SINR, L1-RSRQ, or a hypothetical BLER.

It can be understood through the above descriptions that measurement may be performed only for the first-type measurement parameter in the embodiment. For example, the operation that measurement is performed for the at least one measurement parameter of the at least one candidate beam RS includes that: measurement is performed for the first-type measurement parameter of the at least one candidate beam RS.

It is to be understood that a terminal of a new version or a terminal device with a reporting capability supporting the first-type measurement parameter selects a new candidate beam RS by use of the first-type measurement parameter during beam failure recovery.

Correspondingly, the first communication unit 31 receives threshold information configured by a network side for the first-type measurement parameter. Specifically, a network side may configure threshold information corresponding to different first-type measurement parameters respectively for the terminal device.

Before the operation of measuring the at least one measurement parameter of the at least one candidate beam RS, the method further includes the following operations.

Configuration information sent by the network side is received.

A measurement parameter to be measured by the terminal device is determined based on the configuration information.

For a terminal device that supports the first-type measurement parameter/reporting quality, when the network configures information related to beam failure recovery for the terminal device, the following configuration manners are supported.

A first manner: the configuration information may include the at least one measurement parameter that the network side instructs the terminal device to measure. The at least one measurement parameter may include the L1-RSRP, and/or, the at least one first-type measurement parameter.

Furthermore, the network side may configure one or more measurement parameters for the terminal device through the configuration information. When at least two measurement parameters are configured, the first processing unit 32 may independently select a measurement parameter to be measured from the at least two measurement parameters. Of course, in such case, all the measurement parameters may be selected, or one or part of measurement parameters therein may be selected. For example, the configuration information sent by the network side includes measurement parameters 1, 2 and 3, and if the terminal device is only required to measure one of them, the measurement parameter 1 may be selected for subsequent processing. Correspondingly, the terminal device, when selecting part of measurement parameters in the configuration information, may select them according to historical information. For example, if a certain measurement parameter is frequently adopted for beam RS measurement, the measurement parameter may be kept measured. Or, the terminal device may randomly select them according to the configuration information. Elaborations are omitted herein.

A second manner: a specifically used measurement parameter is indicated. For example, a field indicates that a measurement parameter/reporting quality A or B is used.

For example, the first processing unit 32 determines the measurement parameter to be measured by the terminal device based on a content of a first field in the configuration information.

The first field may be a field, determined according to a protocol and used for indicating the measurement parameter, in the configuration information, and is specifically set according to a practical condition.

For example, when there are two measurement parameters A and B, the measurement parameter A or B may be explicitly indicated through this field in the configuration information.

Or, determination of the measurement parameter to be measured is performed according to whether the first field is default or not.

For example, when the first field in the configuration information is default, it is determined that a first target measurement parameter is required to be measured by the terminal device, and when the first field is not default, it is determined that a second target measurement parameter is required to be measured by the terminal device, the first target measurement parameter being different from the second target measurement parameter.

For example, what the first target measurement parameter and the second target measurement parameter are respectively may be preset through a system, and then the two parties negotiate about that the first field, if indicating, is only used for indicating the second target measurement parameter and the first field, when being default, is determined to be used for indicating the first target measurement parameter. There is made such a hypothesis that there are the measurement parameters A and B. When the field is default, the terminal device is instructed to use A, and when the field is configured, only B is configured to instruct the terminal device to use B.

In such a manner, an RRC configuration modification method is that: the measurement parameter is configured through a quality field, and then the corresponding threshold information is indicated through a threshold field. For example:

```
 Quality quantity value type OPTIONAL, -- Need M
 Threshold threshold value type OPTIONAL, -- Need M.
```

In addition, the following field may be deleted:

```
 rsrp-ThresholdSSB RSRP-Range OPTIONAL, -- Need M.
```

A third manner: the first processing unit 32 determines the measurement parameter to be measured by the terminal device through the threshold information in the configuration information.

For example, a threshold may be indicated to implicitly indicate whether to use the measurement parameter A or the measurement parameter B.

Specifically, a target measurement parameter to be measured by the terminal device may be determined according to a parameter name corresponding to the threshold information or according to a position of the threshold information in the configuration information.

And/or, the target measurement parameter to be measured by the terminal device is determined according to a data type corresponding to the threshold information.

For example, when the existing field rsrp-TrhresholdSSB is configured, the L1-RSRP is used, and when a new field sinr-Threshold is configured, the L1-SINR is used. For example, configurations are made through the following fields in an RRC configuration:

```
 rsrp-ThresholdSSB RSRP-Range OPTIONAL, -- Need M
 sinr-Threshold SINR-Range OPTIONAL, -- Need M.
```

A fourth manner: the first processing unit 32 determines, through a content of a first keyword structure in the configuration information sent by the network side, the measurement parameter that the network side instructs the terminal device to measure.

A first keyword may be a "CHOICE" field. Of course, the two parties may negotiate to use another field as the first keyword according to practical processing. For example, a CHOICE keyword structure is used, and sinr-Threshold may be replaced with another name. If multiple first-type measurement parameters are introduced in Rel-16, other names such as rsq-Threshold may be continuously added. For example:

```
 threshold CHOICE {
 rsrp-ThresholdSSB RSRP-Range OPTIONAL, -- Need M
 sinr-Threshold SINR-Range OPTIONAL, -- Need M}.
```

With adoption of the abovementioned manners, a new measurement parameter may be selected according to the measurement parameter and threshold information configured by the network side.

Based on the abovementioned processing, how to configure the candidate beam RS and the corresponding measurement parameter for measurement parameter selection will be described below.

A first scenario: the first communication unit 31 acquires at least two of the at least one measurement parameter and a set of candidate beam RSs from the network side. For example, for the terminal device that supports the first-type measurement parameter, the network, when configuring the information related to beam failure recovery for the terminal device, configures, through signaling, the two measurement parameters A and B but configures a set of candidate beam RSs corresponding to optional beams.

The measurement parameters sent by the network side may include the first-type measurement parameter and/or the L1-RSRP.

The first processing unit 32 selects a target measurement parameter from the at least two measurement parameters and selects a beam RS from the set of candidate beam RSs according to threshold information and measurement result corresponding to the selected target measurement parameter. That is, the terminal device independently selects A or B and a corresponding threshold to select a beam RS. It is also to be pointed out that the threshold information may include a threshold.

Or, the first processing unit 32 selects, according to at least two pieces of threshold information and at least two measurement results corresponding to the at least two measurement parameters, a beam RS from a subset of candidate beam RSs that satisfy any of the at least two pieces of threshold information in the set of candidate beam RSs, each of the at least two measurement parameters corresponds to a respective one of the at least two pieces of threshold information and a respective one of the at least two measurement results.

Each measurement parameter in the at least two measurement parameters is measured to obtain a respective measurement result, multiple candidate beam RSs are selected from the set of candidate beam RSs according to the respective measurement result corresponding to each measurement parameter and the threshold information configured by the network side for the measurement parameter, a union is formed by candidate beam RSs selected based on all the measurement parameters, and a beam RS is selected from the union as a finally selected RS. For example, a new beam RS may be selected from a union of a subset of candidate beam RSs that satisfy a threshold of the measurement parameter A and a subset of candidate beam RSs that satisfy a threshold of the measurement parameter B. That is to say, the selected beam RS may satisfy the threshold corresponding to the measurement parameter A or satisfy the threshold corresponding to the measurement parameter B.

Or, the first processing unit 32 selects, according to at least two pieces of threshold information and at least two measurement results corresponding to the at least two measurement parameters, a beam RS from a subset of candidate beam RSs that satisfy all of the at least two pieces of threshold information in the set of candidate beam RSs, each of the at least two measurement parameters corresponds to a respective one of the at least two pieces of threshold information and a respective one of the at least two measurement results.

Each measurement parameter in the at least two measurement parameters is measured to obtain a respective measurement result, multiple candidate beam RSs are selected from the set of candidate beam RSs based on the respective measurement result corresponding to each measurement parameter and the threshold information configured by the network side for the measurement parameter, then an intersection of the RSs selected based on all the measurement parameters is obtained, and a beam RS is selected from the intersection as a finally selected RS. For example, a new beam RS may be selected from an intersection of a subset of candidate beam RSs that satisfy the threshold of the measurement parameter A and a subset of candidate beam RSs that satisfy the threshold of the measurement parameter B. That is, the new beam RS needs to satisfy both the threshold corresponding to the measurement parameter A and the threshold corresponding to the measurement parameter B. It is to be pointed out here that processing is stopped when the intersection cannot be obtained based on all the candidate beam RSs.

Or, the first processing unit 32, based on selection priorities of the at least two measurement parameters, preferably based on the measurement result of a measurement parameter with a high selection priority, selects a beam RS that satisfies the threshold information corresponding to the measurement parameter with the high selection priority from the set of candidate beam RSs according to the threshold information and measurement result corresponding to the measurement parameter with the high selection priority.

For example, there are the two measurement parameters A and B, a selection priority of A being relatively high and a selection priority of B being relatively low. In such case, a new beam RS is selected from the set of candidate beam RSs preferably according to the threshold information corresponding to the measurement parameter A with the high selection priority.

When a beam RS that satisfies the threshold information corresponding to the measurement parameter with the high selection priority may not be selected from the set of candidate beam RSs based on the measurement result of the measurement parameter with the high selection priority, a beam RS that satisfies threshold information corresponding to a measurement parameter with a low selection priority is selected from the set of candidate beam RSs according to the threshold information and measurement result of the measurement parameter with the low selection priority.

For example, there are the two measurement parameters A and B, the selection priority of A being relatively high and the selection priority of B being relatively low. In such case, a new beam RS is preferably selected from the set of candidate beam RSs according to the threshold information corresponding to the measurement parameter A with the high selection priority. If no beam RS satisfies the condition, a new beam RS is selected from beam RSs that satisfy the threshold corresponding to the measurement parameter B with the low selection priority.

Or, the first processing unit 32 selects a first candidate subset from the set of candidate beam RSs according to a measurement result and corresponding threshold information of the first target measurement parameter in the at least two measurement parameters and selects a beam RS from the first candidate subset according to a measurement result and corresponding threshold information of a second target measurement parameter in the at least two measurement parameters, a selection priority of the first target measurement parameter being higher than that of the second target measurement parameter.

The first candidate subset may be selected in a manner of selecting the candidate beam RS of which the RS quality is higher than a preset value for addition to the first candidate subset. A measurement standard for the RS quality may be set according to the practical condition, and for example, may include a signal to noise ratio and signal strength. Elaborations are omitted herein.

For example, a subset of beam RSs or beam RSs with top T prioritized quality that satisfy the corresponding threshold are selected according to the measurement parameter A. A new beam is selected from the subset of beam RSs by use of the measurement parameter B.

Specifically, one of the following operations is included.

A second candidate subset is selected from the first candidate subset according to the measurement result and corresponding threshold information of the second target measurement parameter in the at least two measurement parameters, and a beam RS is selected from the second candidate subset. For example, when there are the measurement parameters A and B, after the first candidate subset is obtained by screening the set of candidate beam RSs based on the measurement parameter A, a smaller subset is selected from the first candidate subset based on the threshold information of the measurement parameter B as the second candidate subset, and a new beam RS is selected from the second candidate subset.

Beam RSs with top N prioritized quality are selected from the first candidate subset to form a third candidate subset according to the measurement result and corresponding threshold information of the second target measurement parameter in the at least two measurement parameters, and a beam RS is selected from the third candidate subset, N being an integer. For example, when there are the measurement parameters A and B, after the first candidate subset is obtained by screening the set of candidate beam RSs based on the measurement parameter A, beam RSs with top T' prioritized quality are directly selected from the first candidate subset to form the new third candidate subset, and if elements in the first candidate subset are not enough, the number of elements in the new third candidate subset is smaller than T' and a new beam RS is selected from the third candidate subset.

A beam RS with highest quality is directly selected from the first candidate subset according to the measurement result and corresponding threshold information of the second target measurement parameter in the at least two measurement parameters. For example, when there are the measurement parameters A and B, after the first candidate subset is obtained by screening the set of candidate beam RSs based on the measurement parameter A, the best beam RS is directly selected from the first candidate subset as a new beam RS by use of the measurement parameter B and the corresponding threshold information thereof.

Or, the first processing unit 32 may also select a measurement parameter from the at least two measurement parameters sequentially according to the selection priorities, select a beam RS from the set of candidate beam RSs based on the measurement result and corresponding threshold information of the selected measurement parameter, send an uplink signal corresponding to the selected beam RS to the network, detect whether a valid network response is received or not, and if no valid network response is received from the network side, continue selecting the next measurement parameter from the measurement parameters with relatively low selection priorities.

The first processing unit 32 determines whether all the at least two measurement parameters have been selected or not, and if YES, restarts selecting a measurement parameter from the at least two measurement parameters sequentially according to the selection priorities and executes processing of beam RS selection based on the measurement parameter until an ending condition is satisfied.

For example, there are the measurement parameters A and B, the selection priority of A being relatively high and the selection priority of B being relatively low. A new beam RS is preferably selected from the beam RSs that satisfy the threshold corresponding to the measurement parameter A with the relatively high selection priority, and then a beam failure recovery request is sent through an uplink signal corresponding to the beam RS. If no corresponding valid network response is received, a beam RS is selected from the beam RSs that satisfy the threshold corresponding to the measurement parameter B, and a corresponding beam failure recovery request is sent. If no corresponding valid network response is received, selection from the beam RSs that satisfy the threshold corresponding to the measurement parameter A is continued. The two measurement parameters are alternately used until the stopping condition is satisfied.

Or, the first processing unit 32 selects a measurement parameter from the at least two measurement parameters according to the selection priorities, selects a beam RS from the set of candidate beam RSs based on the measurement result and corresponding threshold information of the selected measurement parameter, sends an uplink signal corresponding to the selected beam RS to the network, if no valid network response is received from the network side, continues performing beam RS selection based on the selected measurement parameter and sending the uplink signal corresponding to the selected RS to the network, and when the processing is stopped according to a rule and no valid network response is received from the network side, selects another measurement parameter from the at least two measurement parameters and continues RS selection based on the selected another measurement parameter.

For example, there are two measurement parameters A and B, the selection priority of A being relatively high and the selection priority of B being relatively low. A new beam RS is preferably selected from the beam RSs that satisfy the threshold according to the measurement parameter A with the high selection priority, and a corresponding beam failure recovery request is sent through an uplink signal corresponding to the new beam RS, and if no corresponding valid network response is received, is continued to be sent according to a rule until the specified stopping condition is satisfied. Then, a beam RS is selected from the beam RSs that satisfy the threshold corresponding to the measurement parameter B and a corresponding beam failure recovery request is sent. That is, the two measurement parameters are not used alternately, one is preferably used, the other is used to continue trying if beam failure recovery fails under a specified condition, and if no corresponding beam RS is successfully selected after all tries are completed, processing may be ended.

The specified stopping condition may be a number of times of transmission. For example, the number of times of transmission may be set to be 5, and in such case, a new measurement parameter of which a selection priority is lower than that of a present measurement parameter may be adopted for RS selection after sending for 5 times.

The selection priority may be configured by the network side, or specified according to a protocol, or determined by the terminal device.

A second scenario: the first processing unit 32 acquires M measurement parameters and M sets of candidate beam RSs from the network side, M being an integer greater than or equal to 2 and each of the M measurement parameters corresponding to a different set of candidate beam RSs.

The measurement parameters sent by the network side may include the first-type measurement parameter and/or the L1-RSRP.

For example, when there are the two measurement parameters A and B, for the terminal device supporting the first-type measurement parameter/reporting quality, the network, when configuring the information related to beam failure recovery for the terminal device, configures, through signaling, the two measurement parameters A and B but configures two sets of candidate beam RSs corresponding to optional beams. The two sets correspond to the measurement parameters A and B respectively, namely a beam RS set 1 corresponds to the measurement parameter A and a beam RS set 2 corresponds to the measurement parameter B.

A new beam is selected according to the measurement parameters and thresholds configured by the network specifically in one of the following manners.

The first processing unit 32 selects a target measurement parameter from the M measurement parameters and selects a beam RS from a set of candidate beam RSs corresponding to the target measurement parameter according to threshold information and measurement result corresponding to the selected target measurement parameter. For example, when two measurement parameters are configured, the beam RS set 1 or 2 is independently selected, and a new beam RS is selected by use of the corresponding measurement result and threshold.

Or, the first processing unit 32 selects, for each of the M measurement parameters, beam RSs satisfying the threshold information of the measurement parameter from the set of candidate beam RSs corresponding to the measurement parameter according to the threshold information and measurement result corresponding to the measurement parameter, and selects a beam RS from a union set formed by all of the selected beam RSs. For example, when two measurement parameters are configured, a first set of beam RSs that satisfy a threshold corresponding to a measurement parameter 1 are selected from the beam RS set 1 and a second set of beam RSs that satisfy a threshold corresponding to a measurement parameter 2 are selected from the beam RS set 2, and a new beam RS is selected from a union formed by the first set of beam RSs and the second set of beam RSs.

Or, the first processing unit 32 sequentially selects a measurement parameter in a descending order of selection priorities of the M measurement parameters, determines whether a beam RS that satisfies a condition can be selected from a corresponding set of candidate beam RSs or not according to the threshold information and measurement result corresponding to the selected measurement parameter, when the beam RS that satisfies the condition can be selected, completes beam RS selection, otherwise selects another measurement parameter. For example, a new first set of RSs are preferably selected from the beam RSs that satisfy the corresponding threshold in the beam RS set 1 corresponding to the measurement parameter 1, and when no beam RS satisfies the condition, a new second set of beam RSs are selected from the beam RS set 2 corresponding to the measurement parameter 2 according to the corresponding threshold.

Or, the first processing unit 32 selects a measurement parameter from the M measurement parameters sequentially according to the selection priorities, selects a beam RS from the set of candidate beam RSs corresponding to the selected measurement parameter based on the measurement result and corresponding threshold information of the selected measurement parameter, sends an uplink signal corresponding to the selected candidate beam RS to the network, detects whether a valid network response is received or not, and when no valid network response is received from the network side, continues selecting a next measurement parameter from the measurement parameters with relatively low selection priorities.

The first processing unit 32 judges whether all the M measurement parameters have been selected or not, and if YES, restarts extracting a measurement parameter from the M measurement parameters sequentially according to the selection priorities and executes processing of beam RS selection based on the measurement parameter until a stopping condition is satisfied.

For example, the measurement parameters 1 and 2 are configured, a selection priority of the measurement parameter 1 being relatively high. A new beam RS is preferably selected from the beam RSs satisfying the corresponding threshold in the beam RS set 1 corresponding to the measurement parameter 1 with the relatively high selection priority, and then a corresponding beam failure recovery request is sent on an uplink resource corresponding to the new beam RS. If no corresponding valid network response is received, a beam RS is selected from the beam RSs satisfying the corresponding threshold in the beam RS set 2 corresponding to the measurement parameter 2, and a corresponding beam failure recovery request is sent on an uplink resource corresponding to the selected beam RS. If no corresponding valid network response is received, selection from the beam RSs satisfying the corresponding threshold in the beam RS set 1 is continued and sending is continued. The two measurement parameters are alternately used until the stopping condition is satisfied.

Or, the first processing unit 32 selects a measurement parameter from the M measurement parameters according to the selection priorities, selects a beam RS from the corresponding set of candidate beam RSs based on the measurement result and corresponding threshold information of the selected measurement parameter, sends an uplink signal corresponding to the selected beam RS to the network, detects whether a valid network response is received or not.

When no valid network response is received from the network side, the first processing unit 32 executes processing of selecting the beam RS based on the selected measurement parameter and sending the uplink signal corresponding to the selected beam RS to the network, and
when the processing is stopped according to a rule and no valid network response is received from the network side, selects another measurement parameter from the M measurement parameters and continues beam RS selection from the candidate beam RS set corresponding to the another measurement parameter.

For example, the measurement parameters 1 and 2 are configured, the selection priority of the measurement parameter 1 being relatively high. A new beam RS is preferably selected from the beam RSs satisfying the corresponding threshold in the beam RS set 1 corresponding to the measurement parameter 1, and a corresponding beam failure recovery request is sent, and if no corresponding valid network response is received, is continued to be sent according to a rule until the specified stopping condition is satisfied. Then, a beam RS is selected from the RSs satisfying the corresponding threshold in the beam RS set 2 corresponding to the measurement parameter 2, and a corresponding beam failure recovery request is sent. In this manner, two measurement parameters are not used alternately during a selection operation over the multiple measurement parameters, one is preferably used, and if beam failure recovery fails under a specified condition, the other is used to continue trying.

A determination manner for priorities of the M sets of candidate beam RSs is one of the following: configuration by the network side, determination according to RS types, specification according to a protocol, determination based on the corresponding measurement parameters, or determination based on the corresponding threshold information.

The threshold information may include at least one of a threshold and a threshold type. Of course, there may also be other contents, and elaborations are omitted herein.

Configuration by the network side includes:
configuration according to an explicit indication sent by the network side, for example, the network side explicitly indicates a set priority;
or,
determination according to a position of a domain where each set of candidate beam RSs are located in the configuration information sent by the network side, for example, the priorities are determined according to positions of domains corresponding to the beam RS set 1 and beam RS set 2 in configuration signaling.

Determination according to the RS types includes:
determination according to correspondences, configured by the network side, between beam RS types and priorities, or, determination according to the correspondences, specified in the protocol, between the beam RS types and the priorities.

For example, the priorities of the beam RS set 1 and beam RS set 2 are determined according to beam RS types. The corresponding relationship between the beam RS type and the priority is configured by the network, or, the corresponding relationship between the beam RS type and the priority is specified in the protocol.

The threshold information is configured through RRC. The first processing unit 32 determines threshold information corresponding to a beam RS type according to the threshold information configured through RRC and adjusts threshold information corresponding to another beam RS type according to power offset information, or, determines threshold information corresponding to at least two RS types according to the threshold information configured through RRC.

The beam RS may comprise at least one of an SSB or a CSI-RS.

It is to be pointed out that the embodiment does not involve whether the threshold information is different for different RS types or not. For the L1-RSRP, a threshold for the SSB may be configured through RRC, and thus the threshold, when being used for the CSI-RS, is required to be adjusted according to a power offset. For a newly introduced measurement parameter, there are two possibilities: the threshold configured through RRC is for a certain beam RS type and thus is required to be adjusted according to the power offset when being used for another type (like the L1-RSRP); and the threshold configured through RRC is only configured for multiple beam RS types.

It can be seen that, with adoption of the solution, the first-type measurement parameter other than the L1-RSRP may be configured, thereby implementing beam RS measurement based on the newly configured measurement parameter. In such a manner, normal configuration and measurement of a system is ensured when the new measurement parameter is introduced, a processing capability of the system is ensured, and the problems of relatively undiversified measurement parameter and inapplicability to multiple communication scenarios may be solved.

### Fourth Embodiment

The embodiment of the disclosure provides a network device, which includes a second communication unit.

The second communication unit configures at least one measurement parameter of at least one beam RS for a terminal device.

The measurement parameter at least includes a first-type measurement parameter, and the first-type measurement parameter comprises a parameter, other than L1-RSRP, used for indicating quality of a beam RS.

It is to be pointed out that the measurement parameter may include the L1-RSRP. That is, during practical processing, the measurement parameter may include the L1-RSRP and/or at least one first-type measurement parameter.

The first-type measurement parameter may include at least one of an L1-SINR or L1-RSRQ.

That is, when a new beam RS is selected by the solution provided in the embodiment, the terminal device may perform measurement by use of existing L1-RSRP, and/or, may also perform measurement by use of one or more of the L1-SINR, L1-RSRQ, or a hypothetical BLER.

It can be understood through the above descriptions that measurement may be performed only for the first-type measurement parameter in the embodiment. For example, the operation that measurement is performed for at least one measurement parameter of at least one candidate beam RS includes that: the second communication unit sends configuration information to the terminal device; and the measurement parameter to be measured by the terminal device is indicated based on the configuration information.

It is to be understood that a terminal of a new version or a terminal device with a reporting capability supporting the first-type measurement parameter selects a new candidate beam RS by use of the first-type measurement parameter during beam failure recovery.

Correspondingly, the second communication unit configures threshold information for the first-type measurement parameter. Specifically, a network side may configure corresponding threshold information for different first-type measurement parameters respectively for the terminal device.

For a terminal device that supports the first-type measurement parameter/reporting quality, when the network configures information related to beam failure recovery for the terminal device, the following configuration manners are supported.

A first manner: the configuration information may include the at least one measurement parameter that the network side instructs the terminal device to measure. The at least one measurement parameter may include the L1-RSRP, and/or, the at least one first-type measurement parameter.

Furthermore, the second communication unit may configure one or more measurement parameters for the terminal device through the configuration information. When at least two measurement parameters are configured, the terminal device may independently select a measurement parameter to be measured from the at least two measurement parameters. Of course, in such case, all the measurement parameters may be selected, or one or part of measurement parameters therein may be selected. For example, the configuration information sent by the network side includes measurement parameters 1, 2 and 3, and if the terminal device is only required to measure one of them, the measurement parameter 1 may be selected for subsequent processing. Correspondingly, the terminal device, when selecting part of measurement parameters in the configuration information, may select them according to historical information. For example, if a certain measurement parameter is frequently used for beam RS measurement, the measurement parameter may be kept measured. Or, the terminal device may randomly select, according to the configuration information, the measurement parameter to be measured. Elaborations are omitted herein.

A second manner: a specifically used measurement parameter is indicated. For example, a field indicates that a measurement parameter/reporting quality A or B is used.

For example, the second communication unit indicates the measurement parameter to be measured by the terminal device based on a content of a first field in the configuration information.

The first field may be a field, determined according to a protocol and used for indicating the measurement parameter, in the configuration information, and is specifically set according to a practical condition.

For example, when there are two measurement parameters A and B, the measurement parameter A or B may be explicitly indicated through this field in the configuration information.

Or, determination of the measurement parameter to be measured is performed according to whether the first field is default or not.

For example, when the first field in the configuration information is default, it is indicated that a first target measurement parameter is required to be measured by the terminal device, and when the first field is not default, it is indicated that a second target measurement parameter is required to be measured by the terminal device, the first target measurement parameter being different from the second target measurement parameter.

For example, what the first target measurement parameter and the second target measurement parameter are respectively may be preset through a system, and then the two parties negotiate about that the first field, if indicating, is only used for indicating the second target measurement parameter and the first field, when being default, is determined to be used for indicating the first target measurement parameter. There is made such a hypothesis that there are the measurement parameters A and B. When the field is default, the terminal device is instructed to use A, and when the field is configured, only B is configured to instruct the terminal device to use B.

In such a manner, an RRC configuration modification method is that: the measurement parameter is configured through a quality field, and then the corresponding threshold information is indicated through a threshold field. For example:

```
 Quality quantity value type OPTIONAL, -- Need M
 Threshold threshold value type OPTIONAL, -- Need M.
```

In addition, the following field may be deleted:

```
 rsrp-ThresholdSSB RSRP-Range OPTIONAL, -- Need M.
```

A third manner: the second communication unit indicates the measurement parameter to be measured by the terminal device through the threshold information in the configuration information.

For example, a threshold may be indicated to implicitly indicate whether to use the measurement parameter A or the measurement parameter B.

Specifically, a target measurement parameter to be measured by the terminal device may be indicated according to a parameter name corresponding to the threshold information or according to a position of the threshold information in the configuration information.

And/or, the target measurement parameter to be measured by the terminal device is indicated according to a data type corresponding to the threshold information.

For example, when the existing field rsrp-TrhresholdSSB is configured, the L1-RSRP is used, and when a new field sinr-Threshold is configured, the L1-SINR is used. For example, configurations are made through the following fields in an RRC configuration:

```
 rsrp-ThresholdSSB RSRP-Range OPTIONAL, -- Need M
 sinr-Threshold SINR-Range OPTIONAL, -- Need M.
```

A fourth manner: the second communication unit indicates the measurement parameter to be measured by the terminal device through a content of a first keyword structure in the configuration information.

A first keyword may be a "CHOICE" field. Of course, the two parties may negotiate to use another field as the first keyword according to practical processing. For example, a CHOICE keyword structure is used, threshold, sinr-Threshold may be replaced with another name, and sinr-Threshold is only used for indicating an identifier of the first-type measurement parameter here. If multiple first-type measurement parameters are introduced in Rel-16, other names such as rsq-Threshold may be continuously added. For example:

```
 threshold CHOICE {
 rsrp-ThresholdSSB RSRP-Range OPTIONAL, -- Need M
 sinr-Threshold SINR-Range OPTIONAL, -- Need M}.
```

With adoption of the abovementioned manners, a new measurement parameter may be selected according to the measurement parameter and threshold information configured by the network side.

Based on the abovementioned processing, how to configure the candidate beam RS and the corresponding measurement parameter for measurement parameter selection will be described below.

A first scenario: the second communication unit sends at least two of the at least one measurement parameter and a set of candidate beam RSs to the terminal device. For example, for the terminal device that supports the first-type measurement parameter, the network, when configuring the information related to beam failure recovery for the terminal device, configures, through signaling, the two measurement parameters A and B but configures a set of candidate beam RSs corresponding to optional beams.

The measurement parameters sent to the terminal device may include the first-type measurement parameter and/or the L1-RSRP.

A second scenario: the second communication unit sends M measurement parameters in the at least one measurement parameter and M sets of candidate beam RSs to the terminal device, M being an integer greater than or equal to 2.

Different measurement parameters correspond to different sets of candidate beam RSs.

The measurement parameters sent to the terminal device may include the first-type measurement parameter and/or the L1-RSRP.

For example, when there are two measurement parameters A and B, for the terminal device that supports the first-type measurement parameter/reporting quality, the network, when configuring the information related to beam failure recovery for the terminal device, configures, through signaling, the two measurement parameters A and B but configures two sets of RSs (candidate beam RSs) corresponding to optional beams. The two sets correspond to the measurement parameters A and B respectively, namely a beam RS set 1 corresponds to the measurement parameter A and a beam RS set 2 corresponds to the measurement parameter B.

The threshold information may include at least one of a threshold or a threshold type. Of course, there may also be other contents, and elaborations are omitted herein.

The second communication unit configures the threshold information through RRC for the terminal device.

The second communication unit determines threshold information corresponding to a beam RS type according to the threshold information configured through RRC and adjusts threshold information corresponding to another beam RS type according to power offset information.

Or, the second communication unit determines threshold information corresponding to at least two beam RS types according to the threshold information configured through RRC.

The RS may be at least one of an SSB or a CSI-RS.

It is to be pointed out that the embodiment does not involve whether the threshold information is different for different RS types or not. For the L1-RSRP, a threshold for the SSB may be configured through RRC, and thus the threshold, when being used for the CSI-RS, is required to be adjusted according to a power offset. For a newly introduced measurement parameter, there are two possibilities: the threshold configured through RRC is for a certain RS type and thus is required to be adjusted according to the power offset when being used for another type (like the L1-RSRP); and the threshold configured through RRC is only configured for multiple RS types.

It can be seen that, with adoption of the solution, the first-type measurement parameter other than the L1-RSRP may be configured, thereby implementing beam RS measurement based on the newly configured measurement parameter. In such a manner, normal configuration and measurement of a system is ensured when the new measurement parameter is introduced, a processing capability of the system is ensured, and the problems of relatively undiversified measurement parameter and inapplicability to multiple communication scenarios may be solved.

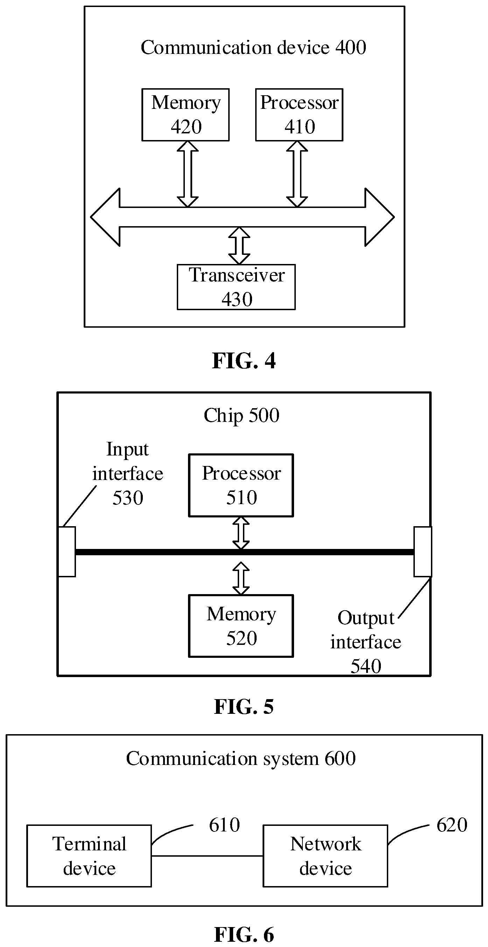

FIG. 4 is a schematic structure diagram of a communication device 400 according to an embodiment of the disclosure. The communication device 400 illustrated in FIG. 4 includes a processor 410, and the processor 410 may call and run a computer program in a memory to perform the method in the embodiments of the disclosure.

Optionally, as illustrated in FIG. 4, the communication device 400 may further include the memory 420. The processor 410 may call and run the computer program in the memory 420 to perform the method in the embodiments of the disclosure.

The memory 420 may be a separate device independent of the processor 410, or may be integrated into the processor 410.

Optionally, as illustrated in FIG. 4, the communication device 400 may further include a transceiver 430, and the processor 410 may control the transceiver 430 to communicate with another device, specifically sending information or data to the another device or receiving information or data from the another device.

The transceiver 430 may include a transmitter and a receiver. The transceiver 430 may further include antennae, and the number of the antennae may be one or more.

Optionally, the communication device 400 may specifically be a network device of the embodiment of the disclosure, and the communication device 400 may implement corresponding flows implemented by the network device in each method of the embodiments of the disclosure. For simplicity, elaborations are omitted herein.

Optionally, the communication device 400 may specifically be a mobile terminal or a terminal device of the embodiment of the disclosure, and the communication device 400 may implement corresponding flows implemented by the mobile terminal/terminal device in each method of the embodiments of the disclosure. For simplicity, elaborations are omitted herein.

FIG. 5 is a schematic structure diagram of a chip according to an embodiment of the disclosure. The chip 500 illustrated in FIG. 5 includes a processor 510, and the processor 510 may call and run a computer program in a memory to perform the method in the embodiments of the disclosure.

Optionally, as illustrated in FIG. 5, the chip 500 may further include the memory 520. The processor 510 may call and run the computer program in the memory 520 to perform the method in the embodiments of the disclosure.

The memory 520 may be a separate independent device independent of the processor 510, or may be integrated into the processor 510.

Optionally, the chip 500 may further include an input interface 530. The processor 510 may control the input interface 530 to communicate with another device or chip, specifically acquiring information or data from the another device or chip.

Optionally, the chip 500 may further include an output interface 540. The processor 510 may control the output interface 540 to communicate with the another device or chip, specifically outputting information or data to the another device or chip.

Optionally, the chip may be applied to the network device of the embodiments of the disclosure, and the chip may implement corresponding flows implemented by the network device in each method of the embodiments of the disclosure. For simplicity, elaborations are omitted herein.

Optionally, the chip may be applied to the terminal device of the embodiments of the disclosure, and the chip may implement corresponding flows implemented by the terminal device in each method of the embodiments of the disclosure. For simplicity, elaborations are omitted herein.

It is to be understood that the chip mentioned in the embodiment of the disclosure may also be called a system-level chip, a system chip, a chip system, or a system on chip, etc.

FIG. 6 is a second block diagram of a communication system 600 according to an embodiment of the disclosure. As illustrated in FIG. 6, a communication system 600 includes a terminal device 610 and a network device 620.

The terminal device 610 may be arranged to implement corresponding functions realized by the terminal device in the method, and the network device 620 may be arranged to implement corresponding functions realized by the network device in the method. For simplicity, elaborations are omitted herein.

It is to be understood that the processor in the embodiment of the disclosure may be an integrated circuit chip and has a signal processing capacity. In an implementation process, each step of the method embodiments may be completed by an integrated logical circuit of hardware in the processor or one or more instructions in a software form. The processor may be a universal processor, a digital signal processor (DSP), an application specific integrated circuit (ASIC), a field programmable gate array (FPGA) or another programmable logical device, discrete gate or transistor logical device and discrete hardware component. Each method, step and logical block diagram disclosed in the embodiments of the disclosure may be implemented or executed. The universal processor may be a microprocessor or the processor may also be any conventional processor and the like. The steps of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as a random access memory (RAM), a flash memory, a read-only memory (ROM), a programmable ROM (PROM) or electrically erasable PROM (EEPROM) and a register. The storage medium is located in a memory, and the processor reads information in the memory, and completes the steps of the method in combination with hardware.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM) and a direct rambus RAM (DR RAM). It is to be noted that the memory of a system and method described in the disclosure is intended to include, but not limited to, memories of these and any other proper types.

It is to be understood that the memory is exemplarily but unlimitedly described. For example, the memory in the embodiments of the disclosure may also be an SRAM, a DRAM, an SDRAM, a DDR SDRAM, an ESDRAM, an SLDRAM and a DR RAM. That is, the memory in the embodiments of the disclosure is intended to include, but not limited to, memories of these and any other proper types.

The embodiments of the disclosure also provide a computer-readable storage medium, which is arranged to store a computer program.

Optionally, the computer-readable storage medium may be applied to a network device in the embodiments of the disclosure, and the computer program enables a computer to execute corresponding flows implemented by the network device in each method of the embodiments of the disclosure. For simplicity, elaborations are omitted herein.

Optionally, the computer-readable storage medium may be applied to a mobile terminal/terminal device in the embodiments of the disclosure, and the computer program enables a computer to execute corresponding flows implemented by the terminal device in each method of the embodiments of the disclosure. For simplicity, elaborations are omitted herein.

The embodiments of the disclosure also provide a computer program product, which includes one or more computer program instructions.

Optionally, the computer program product may be applied to a network device in the embodiments of the disclosure, and the computer program instructions enable a computer to execute corresponding flows implemented by the network device in each method of the embodiments of the disclosure. For simplicity, elaborations are omitted herein.

Optionally, the computer program product may be applied to a mobile terminal/terminal device in the embodiments of the disclosure, and the computer program instructions enable the computer to execute corresponding flows implemented by the mobile terminal/terminal device in each method of the embodiments of the disclosure. For simplicity, elaborations are omitted herein.

The embodiments of the disclosure also provide a computer program.

Optionally, the computer program may be applied to a network device in the embodiments of the disclosure, and the computer program runs in a computer to enable the computer to execute corresponding flows implemented by the network device in each method of the embodiments of the disclosure. For simplicity, elaborations are omitted herein.

Optionally, the computer program may be applied to a mobile terminal/terminal device in the embodiments of the disclosure, and the computer program runs in the computer to enable the computer to execute corresponding flows implemented by the mobile terminal/terminal device in each method of the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions arranged to enable a computer device (which may be a personal computer, a server, a network device or the like) to execute all or part of the steps of the method in each embodiment of the disclosure. The abovementioned storage medium includes: various media capable of storing program codes such as a U disk, a mobile hard disk, a ROM, a RAM, a magnetic disk or an optical disk.

[**00378]** The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for beam reference signal (RS) measurement configuration, applied to a terminal device, the method comprising:
measuring at least one measurement parameter of at least one candidate beam RS, to obtain a measurement result for the at least one measurement parameter of the at least one candidate beam RS; and
selecting a beam RS from the at least one candidate beam RS based on the measurement result for the at least one measurement parameter of the at least one candidate beam RS,
wherein the measurement parameter at least comprises a first-type measurement parameter, and the first-type measurement parameter comprises a parameter, other than layer 1 - reference signal receiving power (L1-RSRP), used for indicating quality of an beam RS.

2. The method of claim 1, wherein measuring the at least one measurement parameter of the at least one candidate beam RS comprises:
measuring the first-type measurement parameter of the at least one candidate beam RS.

3. The method of claim 2, further comprising:
receiving threshold information configured by a network side for the first-type measurement parameter.

4. The method of claim 1, further comprising:
before measuring the at least one measurement parameter of the at least one candidate beam RS,
receiving configuration information from a network side; and
determining a measurement parameter to be measured by the terminal device based on the configuration information.

5. The method of claim 4, wherein determining the measurement parameter to be measured by the terminal device based on the configuration information comprises:
determining the measurement parameter to be measured by the terminal device based on a content of a first field in the configuration information.

6. The method of claim 4, wherein determining the measurement parameter to be measured by the terminal device based on the configuration information comprises:
when a first field in the configuration information is default, determining that a first target measurement parameter is required to be measured by the terminal device;
when the first field is not default, determining that a second target measurement parameter is required to be measured by the terminal device,
wherein the first target measurement parameter is different from the second target measurement parameter.

7. The method of claim 1, wherein determining the measurement parameter to be measured by the terminal device based on the configuration information comprises:
determining the measurement parameter to be measured by the terminal device through threshold information in the configuration information.

8. The method of claim 7, wherein determining the measurement parameter to be measured by the terminal device through the threshold information in the configuration information comprises at least one of:
determining a target measurement parameter to be measured by the terminal device according to a parameter name corresponding to the threshold information or according to a position of the threshold information in the configuration information; or
determining the target measurement parameter to be measured by the terminal device according to a data type corresponding to the threshold information.

9. The method of claim 1, further comprising:
determining the measurement parameter to be measured by the terminal device through a content of a first keyword structure in configuration information sent by a network side.

10. The method of any one of claims 1-9, further comprising:
acquiring at least two of the at least one measurement parameter and a set of candidate beam RSs from a network side.

11. The method of claim 10, wherein selecting the beam RS from the at least one candidate beam RS based on the measurement result for the at least one measurement parameter of the at least one candidate beam RS comprises:
selecting a target measurement parameter from the at least two measurement parameters; and
selecting a beam RS from the set of candidate beam RSs according to threshold information and measurement result corresponding to the selected target measurement parameter.

12. The method of claim 10, wherein selecting the beam RS from the at least one candidate beam RS based on the measurement result for the at least one measurement parameter of the at least one candidate beam RS comprises:
selecting, according to at least two pieces of threshold information and at least two measurement results corresponding to the at least two measurement parameters, a beam RS from a set of candidate beam RSs that satisfy any of the at least two pieces of threshold information, each of the at least two measurement parameters corresponding to a respective one of the at least two pieces of threshold information and a respective one of the at least two measurement results.

13. The method of claim 10, wherein selecting the beam RS from the at least one candidate beam RS based on the measurement result for the at least one measurement parameter of the at least one candidate beam RS comprises:
selecting, according to at least two pieces of threshold information and at least two measurement results corresponding to the at least two measurement parameters, a beam RS from a set of candidate beam RSs that satisfy all of the at least two pieces of threshold information, each of the at least two measurement parameters corresponding to a respective one of the at least two pieces of threshold information and a respective one of the at least two measurement results.

14. The method of claim 10, wherein selecting the beam RS from the at least one candidate beam RS based on the measurement result for the at least one measurement parameter of the at least one candidate beam RS comprises:
based on selection priorities of the at least two measurement parameters, preferably based on a measurement result of a measurement parameter with a high selection priority, selecting, according to the measurement result and threshold information corresponding to the measurement parameter with the high selection priority, a beam RS that satisfies the threshold information from the set of candidate beam RSs.

15. The method of claim 14, further comprising:
when no beam RS that satisfies the threshold information corresponding to the measurement parameter with the high selection priority is selected from the set of candidate beam RSs based on the measurement result of the measurement parameter with the high selection priority, selecting, according to threshold information and measurement result corresponding to a measurement parameter with a low selection priority, a beam RS that satisfies the threshold information corresponding to the measurement parameter with the low selection priority from the set of candidate beam RSs.

16. The method of claim 10, wherein selecting the beam RS from the at least one candidate beam RS based on the measurement result for the at least one measurement parameter of the at least one candidate beam RS comprises:
selecting a first candidate subset from the set of candidate beam RSs according to a measurement result and corresponding threshold information of a first target measurement parameter in the at least two measurement parameters; and
selecting a beam RS from the first candidate subset according to a measurement result and corresponding threshold information of a second target measurement parameter in the at least two measurement parameters,
wherein a selection priority of the first target measurement parameter is higher than that of the second target measurement parameter.

17. The method of claim 16, wherein selecting the beam RS from the first candidate subset according to the measurement result and corresponding threshold information of the second target measurement parameter in the at least two measurement parameters comprises one of:
selecting a second candidate subset from the first candidate subset according to the measurement result and corresponding threshold information of the second target measurement parameter in the at least two measurement parameters, and selecting a beam RS from the second candidate subset;
selecting beam RSs with top N prioritized quality from the first candidate subset to form a third candidate subset according to the measurement result and corresponding threshold information of the second target measurement parameter in the at least two measurement parameters, and selecting a beam RS from the third candidate subset, N being an integer; or
selecting a beam RS with highest quality from the first candidate subset according to the measurement result and corresponding threshold information of the second target measurement parameter in the at least two measurement parameters.

18. The method of claim 10, wherein selecting the beam RS from the at least one candidate beam RS based on the measurement result for the at least one measurement parameter of the at least one candidate beam RS comprises:
selecting a measurement parameter from the at least two measurement parameters sequentially according to selection priorities, selecting a beam RS from the set of candidate beam RSs based on a measurement result and corresponding threshold information of the selected measurement parameter, sending an uplink signal corresponding to the selected beam RS to a network side, detecting whether a valid network response is received; and
when no valid network response is received from the network side, continuing selecting a next measurement parameter from measurement parameters with relatively low selection priorities.

19. The method of claim 18, wherein continuing selecting the next measurement parameter from the measurement parameters with the relatively low selection priorities comprises:
determining whether all the at least two measurement parameters have been selected, and when all the at least two measurement parameters have been selected, restarting to select a measurement parameter from the at least two measurement parameters sequentially according to the selection priorities and execute processing of beam RS selection based on the selected measurement parameter until a stopping condition is satisfied.

20. The method of claim 10, wherein selecting the beam RS from the at least one candidate beam RS based on the measurement result for the at least one measurement parameter of the at least one candidate beam RS comprises:
selecting a measurement parameter from the at least two measurement parameters according to selection priorities, selecting a beam RS from the set of candidate beam RSs based on a measurement result and corresponding threshold information of the selected measurement parameter, and sending an uplink signal corresponding to the selected beam RS to a network side;
when no valid network response is received from the network side, continuing selecting a beam RS based on the selected measurement parameter and sending the uplink signal corresponding to the selected beam RS to the network; and
when beam RS selection is stopped according to a rule and no valid network response is received from the network side, selecting another measurement parameter from the at least two measurement parameters and continuing the beam RS selection.

21. The method of any one of claims 14-20, wherein the selection priority is configured by the network side, or specified in a protocol, or determined by the terminal device.

22. The method of any one of claims 1-9, further comprising:
acquiring M measurement parameters and M sets of candidate beam RSs from a network side,
wherein M is an integer greater than or equal to 2, and each of the M measurement parameters corresponds to a different one of the M sets of candidate beam RSs.

23. The method of claim 22, wherein selecting the beam RS from the at least one candidate beam RS based on the measurement result for the at least one measurement parameter of the at least one candidate beam RS comprises:
selecting a target measurement parameter from the M measurement parameters; and
selecting a beam RS from a set of candidate beam RSs corresponding to the target measurement parameter according to threshold information and measurement result corresponding to the selected target measurement parameter.

24. The method of claim 22, wherein selecting the beam RS from the at least one candidate beam RS based on the measurement result for the at least one measurement parameter of the at least one candidate beam RS comprises:
selecting, for each of the M measurement parameters, beam RSs that satisfy the threshold information corresponding to the measurement parameter from the set of candidate beam RSs corresponding to the measurement parameter according to the threshold information and measurement result corresponding to the measurement parameter; and
selecting a beam RS from a union formed by all of the selected beam RSs.

25. The method of claim 22, wherein selecting the beam RS from the at least one candidate beam RS based on the measurement result for the at least one measurement parameter of the at least one candidate beam RS comprises:
sequentially selecting a measurement parameter from the M measurement parameters in a descending order of selection priorities of the M measurement parameters;
determining whether a beam RS that satisfies a condition can be selected from the set of candidate beam RSs corresponding to the selected measurement parameter according to threshold information and measurement result corresponding to the selected measurement parameter; and
completing beam RS selection in response to determining that the beam RS satisfying the condition can be selected, otherwise selecting another measurement parameter.

26. The method of claim 22, wherein selecting the beam RS from the at least one candidate beam RS based on the measurement result for the at least one measurement parameter of the at least one candidate beam RS comprises:
selecting a measurement parameter from the M measurement parameters sequentially according to selection priorities, selecting a beam RS from the set of candidate beam RSs corresponding to the selected measurement parameter based on a measurement result and corresponding threshold information of the selected measurement parameter, sending an uplink signal corresponding to the selected beam RS to a network side, and detecting whether a valid network response is received; and
when no valid network response is received from the network side, continuing selecting a next measurement parameter from measurement parameters with relatively low selection priorities.

27. The method of claim 26, wherein continuing selecting the next measurement parameter from the measurement parameters with the relatively low selection priorities comprises:
determining whether all the M measurement parameters have been selected, and when all the M measurement parameters have been selected, restarting selecting a measurement parameter from the M measurement parameters sequentially according to the selection priorities and executing processing of beam RS selection based on the measurement parameter until the stopping condition is satisfied.

28. The method of claim 22, wherein selecting the beam RS from the at least one candidate beam RS based on the measurement result for the at least one measurement parameter of the at least one candidate beam RS comprises:
selecting a measurement parameter from the M measurement parameters according to selection priorities, selecting a beam RS from a set of candidate beam RSs corresponding to the selected measurement parameter based on a measurement result and corresponding threshold information of the selected measurement parameter, sending an uplink signal corresponding to the selected beam RS to a network side, and detecting whether a valid network response is received;
when no valid network response is received from the network side, executing processing of selecting the beam RS based on the selected measurement parameter and sending the uplink signal corresponding to the selected beam RS to the network side; and
when the processing is stopped according to a rule and no valid network response is received from the network side, selecting another measurement parameter from the M measurement parameters and continuing beam RS selection from a set of candidate beam RSs corresponding to the another measurement parameter.

29. The method of any one of claims 25-28, wherein priorities of the M sets of candidate beam RSs are determined in one of the following manners:
the priorities of the M sets of candidate beam RSs are configured by a network side;
the priorities of the M sets of candidate beam RSs are determined according to beam RS types;
the priorities of the M sets of candidate beam RSs are specified according to a protocol;
the priorities of the M sets of candidate beam RSs are determined based on corresponding measurement parameters; or
the priorities of the M sets of candidate beam RSs are determined based on corresponding threshold information.

30. The method of claim 29, wherein the priorities of the M sets of candidate beam RSs are configured by the network side comprises:
configuring the priorities of the M sets of candidate beam RSs according to an explicit indication sent by the network side; or
determining the priorities of the M sets of candidate beam RSs according to a position of a domain where each set of candidate beam RSs are located in configuration information sent by the network side.

31. The method of claim 29, wherein the priorities of the M sets of candidate beam RSs are determined according to the beam RS types comprises:
determining the priorities of the M sets of candidate beam RSs according to correspondences, configured by the network side, between beam RS types and priorities; or
determining the priorities of the M sets of candidate beam RSs according to correspondences, specified according to the protocol, between beam RS types and priorities.

32. The method of any one of claims 10-31, further comprising:
configuring threshold information through radio resource control (RRC).

33. The method of claim 32, wherein configuring the threshold information through RRC comprises:
determining threshold information corresponding to a beam RS type according to the threshold information configured through RRC, and adjusting threshold information corresponding to another beam RS type according to power offset information; or
determining threshold information corresponding to at least two beam RS types according to the threshold information configured through RRC.

34. The method of any one of claims 1-33, wherein the beam RS comprises at least one of a synchronous signal block (SSB) or a channel state information reference signal (CSI-RS).

35. The method of any one of claims 1-34, wherein the first-type measurement parameter comprises at least one of layer 1 - signal to interference plus noise ratio (L1-SINR) or a layer 1- reference signal receiving quality (L1-RSRQ).

36. A method for beam reference signal (RS) measurement configuration, applied to a network device, the method comprising:
configuring at least one measurement parameter of at least one beam RS for a terminal device,
wherein the measurement parameter at least comprises a first-type measurement parameter, and the first-type measurement parameter comprises a parameter, other than layer1 - reference signal receiving power (L1-RSRP), used for indicating quality of a beam RS.

37. The method of claim 36, further comprising:
configuring threshold information for the first-type measurement parameter.

38. The method of claim 36, further comprising:
sending configuration information to the terminal device; and
indicating a measurement parameter to be measured by the terminal device based on the configuration information.

39. The method of claim 38, wherein indicating the measurement parameter to be measured by the terminal device based on the configuration information comprises:
indicating the measurement parameter to be measured by the terminal device based on a content of a first field in the configuration information.

40. The method of claim 38, wherein indicating the measurement parameter to be measured by the terminal device based on the configuration information comprises:
when a first field in the configuration information is default, indicating that a first target measurement parameter is required to be measured by the terminal device;
when the first field is not default, indicating that a second target measurement parameter is required to be measured by the terminal device,
wherein the first target measurement parameter is different from the second target measurement parameter.

41. The method of claim 38, wherein indicating the measurement parameter to be measured by the terminal device based on the configuration information comprises:
indicating the measurement parameter to be measured by the terminal device through threshold information in the configuration information.

42. The method of claim 41, wherein indicating the measurement parameter to be measured by the terminal device through the threshold information in the configuration information comprises at least one of:
indicating a target measurement parameter to be measured by the terminal device according to a parameter name corresponding to the threshold information or according to a position of the threshold information in the configuration information; or
indicating the target measurement parameter to be measured by the terminal device according to a data type corresponding to the threshold information.

43. The method of claim 38, further comprising:
indicating the measurement parameter to be measured by the terminal device through a content in a first keyword structure in the configuration information.

44. The method of any one of claims 36-42, further comprising:
sending at least two of the at least one measurement parameter and a set of candidate beam RSs to the terminal device.

45. The method of any one of claims 36-43, further comprising:
sending M measurement parameters and M sets of candidate beam RSs to the terminal device,
wherein M is an integer greater than or equal to 2, and different measurement parameters correspond to different sets of candidate beam RSs.

46. The method of any one of claims 36-45, further comprising:
configuring threshold information through radio resource control (RRC) for the terminal device.

47. The method of claim 46, wherein configuring the threshold information through RRC for the terminal device comprises:
determining threshold information corresponding to a beam RS type according to the threshold information configured through RRC, and adjusting threshold information corresponding to another beam RS type according to power offset information; or
determining threshold information corresponding to at least two beam RS types according to the threshold information configured through RRC.

48. A terminal device, comprising:
a first communication unit, arranged to measure at least one measurement parameter of at least one candidate beam reference signal (RS), to obtain a measurement result for the at least one measurement parameter of the at least one candidate beam RS; and
a first processing unit, arranged to select a beam RS from the at least one candidate beam RS based on the measurement result for the at least one measurement parameter of the at least one candidate beam RS,
wherein the measurement parameter at least comprises a first-type measurement parameter, and the first-type measurement parameter comprises a parameter, other than layer 1 - reference signal receiving power (L1-RSRP), used for indicating quality of a beam RS.

49. The terminal device of claim 48, wherein the first communication unit is specifically arranged to measure the first-type measurement parameter of the at least one candidate beam RS.

50. The terminal device of claim 49, wherein the first communication unit is further arranged to receive threshold information configured by a network side for the first-type measurement parameter.

51. The terminal device of claim 48, wherein
the first communication unit is further arranged to receive configuration information from a network side; and
the first processing unit is further arranged to determine a measurement parameter to be measured by the terminal device based on the configuration information.

52. The terminal device of claim 51, wherein the first processing unit is specifically arranged to determine the measurement parameter to be measured by the terminal device based on a content of a first field in the configuration information.

53. The terminal device of claim 51, wherein the first processing unit is specifically arranged to:
when a first field in the configuration information is default, determine that a first target measurement parameter is required to be measured by the terminal device;
when the first field is not default, determine that a second target measurement parameter is required to be measured by the terminal device,
wherein the first target measurement parameter is different from the second target measurement parameter.

54. The terminal device of claim 48, wherein the first processing unit is specifically arranged to determine the measurement parameter to be measured by the terminal device through threshold information in the configuration information.

55. The terminal device of claim 54, wherein the first processing unit is specifically arranged to perform at least one of:
determining a target measurement parameter to be measured by the terminal device according to a parameter name corresponding to the threshold information or according to a position of the threshold information in the configuration information; or
determining the target measurement parameter to be measured by the terminal device according to a data type corresponding to the threshold information.

56. The terminal device of claim 48, wherein the first processing unit is further arranged to determine the measurement parameter to be measured by the terminal device through a content of a first keyword structure in configuration information sent by a network side.

57. The terminal device of any one of claims 48-56, wherein the first communication unit is further arranged to acquire at least two of the at least one measurement parameter and a set of candidate beam RSs from a network side.

58. The terminal device of claim 57, wherein the first processing unit is specifically arranged to:
select a target measurement parameter from the at least two measurement parameters; and
select a beam RS from the set of candidate beam RSs according to threshold information and measurement result corresponding to the selected target measurement parameter.

59. The terminal device of claim 57, wherein the first processing unit is specifically arranged to select, according to at least two pieces of threshold information and at least two measurement results corresponding to the at least two measurement parameters, a beam RS from a set of candidate beam RSs that satisfy any of the at least two pieces of threshold information, each of the at least two measurement parameters corresponding to a respective one of the at least two pieces of threshold information and a respective one of the at least two measurement results.

60. The terminal device of claim 57, wherein the first processing unit is specifically arranged to select, according to at least two pieces of threshold information and at least two measurement results corresponding to the at least two measurement parameters, a beam RS from a set of candidate beam RSs that satisfy all of the at least two pieces of threshold information, each of the at least two measurement parameters corresponding to a respective one of the at least two pieces of threshold information and a respective one of the at least two measurement results.

61. The terminal device of claim 57, wherein the first processing unit is specifically arranged to:
based on selection priorities of the at least two measurement parameters, preferably based on a measurement result of a measurement parameter with a high selection priority, select, according to the measurement result and threshold information corresponding to the measurement parameter with the high selection priority, a beam RS that satisfies the threshold information from the set of candidate beam RSs.

62. The terminal device of claim 61, wherein the first processing unit is specifically arranged to:
when no beam RS that satisfies the threshold information corresponding to the measurement parameter with the high selection priority is selected from the set of candidate beam RSs based on the measurement result of the measurement parameter with the high selection priority, select, according to threshold information and measurement result corresponding to a measurement parameter with a low selection priority, a beam RS that satisfies the threshold information corresponding to the measurement parameter with the low selection priority from the set of candidate beam RSs.

63. The terminal device of claim 57, wherein the first processing unit is specifically arranged to:
select a first candidate subset from the set of candidate beam RSs according to a measurement result and corresponding threshold information of a first target measurement parameter in the at least two measurement parameters; and
select a beam RS from the first candidate subset according to a measurement result and corresponding threshold information of a second target measurement parameter in the at least two measurement parameters,
wherein a selection priority of the first target measurement parameter is higher than that of the second target measurement parameter.

64. The terminal device of claim 63, wherein the first processing unit is specifically arranged to perform one of the following:
selecting a second candidate subset from the first candidate subset according to the measurement result and corresponding threshold information of the second target measurement parameter in the at least two measurement parameters, and selecting a beam RS from the second candidate subset;
selecting beam RSs with top N prioritized quality from the first candidate subset to form a third candidate subset according to the measurement result and corresponding threshold information of the second target measurement parameter in the at least two measurement parameters, and selecting a beam RS from the third candidate subset, N being an integer; or
selecting a beam RS with highest quality from the first candidate subset according to the measurement result and corresponding threshold information of the second target measurement parameter in the at least two measurement parameters.

65. The terminal device of claim 57, wherein the first processing unit is specifically arranged to:
select a measurement parameter from the at least two measurement parameters sequentially according to selection priorities;
select a beam RS from the set of candidate beam RSs based on a measurement result and corresponding threshold information of the selected measurement parameter;
send an uplink signal corresponding to the selected beam RS to a network side;
detect whether a valid network response is received, and
when no valid network response is received from the network side, continue selecting a next measurement parameter from measurement parameters with relatively low selection priorities.

66. The terminal device of claim 65, wherein the first processing unit is specifically arranged to:
determine whether all the at least two measurement parameters have been selected, and
when all the at least two measurement parameters have been selected, restart to select a measurement parameter from the at least two measurement parameters sequentially according to the selection priorities and execute processing of beam RS selection based on the selected measurement parameter until a stopping condition is satisfied.

67. The terminal device of claim 57, wherein the first processing unit is specifically arranged to:
select a measurement parameter from the at least two measurement parameters according to selection priorities;
select a beam RS from the set of candidate beam RSs based on a measurement result and corresponding threshold information of the selected measurement parameter;
send an uplink signal corresponding to the selected beam RS to a network side,
when no valid network response is received from the network side, continue selecting a beam RS based on the selected measurement parameter and send the uplink signal corresponding to the selected beam RS to the network, and
when beam RS selection is stopped according to a rule and no valid network response is received from the network side, select another measurement parameter from the at least two measurement parameters and continues the beam RS selection.

68. The terminal device of any one of claims 61-67, wherein the selection priority is configured by the network side, or specified in a protocol, or determined by the terminal device.

69. The terminal device of any one of claims 48-56, wherein the first communication unit is further arranged to acquire M measurement parameters and M sets of candidate beam RSs from a network side, M being an integer greater than or equal to 2 and the M measurement parameters corresponding to different sets of candidate beam RSs respectively.

70. The terminal device of claim 69, wherein the first processing unit is specifically arranged to:
select a target measurement parameter from the M measurement parameters; and
select a beam RS from a set of candidate beam RSs corresponding to the target measurement parameter according to threshold information and measurement result corresponding to the selected target measurement parameter.

71. The terminal device of claim 69, wherein the first processing unit is specifically arranged to:
select, for each of the M measurement parameters, beam RSs that satisfy the threshold information corresponding to the measurement parameter from the set of candidate beam RSs corresponding to the measurement parameter according to the threshold information and measurement result corresponding to the measurement parameter; and
select a beam RS from a union formed by all of the selected beam RSs.

72. The terminal device of claim 69, wherein the first processing unit 32 is specifically arranged to:
sequentially select a measurement parameter from the M measurement parameters in a descending order of selection priorities of the M measurement parameters;
determine whether a beam RS that satisfies a condition can be selected from the set of candidate beam RSs corresponding to the selected measurement parameter according to the threshold information and measurement result corresponding to the selected measurement parameter; and
complete beam RS selection in response to determining that the beam RS satisfying the condition can be selected, otherwise select another measurement parameter.

73. The terminal device of claim 69, wherein the first processing unit 32 is specifically arranged to:
select a measurement parameter from the M measurement parameters sequentially according to selection priorities;
select a beam RS from the set of candidate beam RSs corresponding to the selected measurement parameter based on a measurement result and corresponding threshold information of the selected measurement parameter;
send an uplink signal corresponding to the selected beam RS to a network side;
detect whether a valid network response is received; and
when no valid network response is received from the network side, continue selecting a next measurement parameter from measurement parameters with relatively low selection priorities.

74. The terminal device of claim 73, wherein the first processing unit is specifically arranged to:
determine whether all the M measurement parameters have been selected; and
when all the M measurement parameters have been selected, restart selecting a measurement parameter from the M measurement parameters sequentially according to the selection priorities and execute processing of beam RS selection based on the measurement parameter until the stopping condition is satisfied.

75. The terminal device of claim 69, wherein the first processing unit is specifically arranged to:
select a measurement parameter from the M measurement parameters according to selection priorities;
select a beam RS from a set of candidate beam RSs corresponding to the selected measurement parameter based on a measurement result and corresponding threshold information of the selected measurement parameter;
send an uplink signal corresponding to the selected beam RS to a network side;
detect whether a valid network response is received;
when no valid network response is received from the network side, execute processing of selecting the beam RS based on the selected measurement parameter and sending the uplink signal corresponding to the selected beam RS to the network side; and
when the processing is stopped according to a rule and no valid network response is received from the network side, select another measurement parameter from the M measurement parameters and continue beam RS selection from a set of candidate beam RSs corresponding to the another measurement parameter.

76. The terminal device of any one of claims 68-75, wherein priorities of the M sets of candidate beam RSs are determined in one of the following manners:
the priorities of the M sets of candidate beam RSs are configured by a network side;
the priorities of the M sets of candidate beam RSs are determined according to beam RS types;
the priorities of the M sets of candidate beam RSs are specified according to a protocol;
the priorities of the M sets of candidate beam RSs are determined based on corresponding measurement parameters; or
the priorities of the M sets of candidate beam RSs are determined based on corresponding threshold information.

77. The terminal device of claim 76, wherein the first processing unit is arranged to:
configure the priorities of the M sets of candidate beam RSs according to an explicit indication sent by the network side; or
determine the priorities of the M sets of candidate beam RSs according to a position of a domain where each set of candidate beam RSs are located in configuration information.

78. The terminal device of claim 76, wherein the first processing unit is arranged to:
determine the priorities of the M sets of candidate beam RSs according to correspondences, configured by the network side, between beam RS types and priorities; or
determine the priorities of the M sets of candidate beam RSs according to correspondences, specified according to the protocol, between beam RS types and priorities.

79. The terminal device of any one of claims 57-78, wherein the first processing unit is further arranged to configure threshold information through radio resource control (RRC).

80. The terminal device of claim 79, wherein the first processing unit is specifically arranged to:
determine threshold information corresponding to a beam RS type according to the threshold information configured through RRC and adjust threshold information corresponding to another beam RS type according to power offset information; or
determine threshold information corresponding to at least two beam RS types according to the threshold information configured through RRC.

81. The terminal device of any one of claims 48-80, wherein the beam RS comprises at least one of a synchronous signal block (SSB) or a channel state information reference signal (CSI-RS).

82. The terminal device of any one of claims 48-81, wherein the first-type measurement parameter comprises at least one of layer 1 - signal to interference plus noise ratio (L1-SINR) or a layer 1- reference signal receiving quality (L1-RSRQ).

83. A network device, comprising:
a second communication unit, arranged to configure at least one measurement parameter of at least one beam reference signal (RS) for a terminal device,
wherein the measurement parameter at least comprises a first-type measurement parameter, and the first-type measurement parameter comprises a parameter, other than layer1 - reference signal receiving power (L1-RSRP), used for indicating quality of a beam RS.

84. The network device of claim 83, wherein the second communication unit is further arranged to configure threshold information for the first-type measurement parameter.

85. The network device of claim 83, wherein the second communication unit is further arranged to:
send configuration information to the terminal device; and
indicate a measurement parameter to be measured by the terminal device based on the configuration information.

86. The network device of claim 85, wherein the second communication unit is specifically arranged to indicate the measurement parameter to be measured by the terminal device based on a content of a first field in the configuration information.

87. The network device of claim 85, wherein the second communication unit is specifically arranged to:
when a first field in the configuration information is default, indicate that a first target measurement parameter is required to be measured by the terminal device;
when the first field is not default, indicate that a second target measurement parameter is required to be measured by the terminal device,
wherein the first target measurement parameter is different from the second target measurement parameter.

88. The network device of claim 85, wherein the second communication unit is specifically arranged to:
indicate the measurement parameter to be measured by the terminal device through threshold information in the configuration information.

89. The network device of claim 88, wherein the second communication unit is specifically arranged to perform at least one of:
indicating a target measurement parameter to be measured by the terminal device according to a parameter name corresponding to the threshold information or according to a position of the threshold information in the configuration information; or
indicating the target measurement parameter to be measured by the terminal device according to a data type corresponding to the threshold information.

90. The network device of claim 88, wherein the second communication unit is further arranged to indicate the measurement parameter to be measured by the terminal device through a content in a first keyword structure in the configuration information.

91. The network device of any one of claims 83-90, wherein the second communication unit is further arranged to send at least two of the at least one measurement parameter and a set of candidate beam RSs to the terminal device.

92. The network device of any one of claims 83-90, wherein the second communication unit is further arranged to send M measurement parameters and M sets of candidate beam RSs to the terminal device,
wherein M is an integer greater than or equal to 2, and different measurement parameters corresponding to different sets of candidate beam RSs.

93. The network device of any one of claims 83-92, wherein the second communication unit is further arranged to configure the threshold information through radio resource control (RRC) for the terminal device.

94. The network device of claim 93, wherein the second communication unit is specifically arranged to:
determine threshold information corresponding to a beam RS type according to the threshold information configured through RRC and adjust threshold information corresponding to another beam RS type according to power offset information; or
determine threshold information corresponding to at least two beam RS types according to the threshold information configured through RRC.

95. A terminal device, comprising:
a processor; and
a memory storing a computer program executable by the processor,
wherein the processor is arranged to call and run the computer program stored in the memory to perform the method of any one of claims 1 to 34.

96. A network device, comprising:
a processor; and
a memory storing a computer program executable by the processor,
wherein the processor is arranged to call and run the computer program stored in the memory to perform the method of any one of claims 35 to 46.

97. A chip, comprising a processor, arranged to call and run a computer program stored in a memory to cause a device installed with the chip to perform the method of any one of claims 1 to 34.

98. A chip, comprising a processor, arranged to call and run a computer program stored in a memory to cause a device installed with the chip to perform the method of any one of claims 35 to 46.

99. A computer-readable storage medium having stored therein a computer program that, when executed by a computer, causes the computer to perform the method of any one of claims 1 to 46.

100. A computer program product comprising computer program instructions that, when executed by a computer, cause the computer to perform the method of any one of claims 1 to 46.

101. A computer program, causing a computer to perform the method of any one of claims 1 to 46.
